# EUROPEAN PATENT APPLICATION

(11) **EP 1 669 883 A1**
(43) Date of publication of application: **14.06.2006**
(21) Application number: 04733960.1
(22) Date of filing: 19.05.2004
(51) Int. Cl.: G06F 15/00, H04L 9/32

(54) **INFORMATION PROCESSING SERVER AND INFORMATION PROCESSING METHOD**

(30) Priority: 29.08.2003 JP 2003307872; 29.09.2003 JP 2003338624
(71) Applicant: Kitagawa, Yoshiko, Tokyo 150-0012 (JP)
(72) Inventor: KITAGAWA, Yoshiko, 1500012 (JP); YOKOKAWA, Kei, Chigasaki-shi, Kanagawa 253-0054 (JP); YAMAKAWA, Denzo, Fujisawa-shi, kanagawa 252-0804 (JP); KITAGAWA, Takashi, Shibuya-ku, Tokyo 150-0012 (JP)
(74) Representative: Grünecker, Kinkeldey, Stockmair & Schwanhäusser Anwaltssozietät
(86) International application number: PCT/JP2004/007112
(87) International publication number: WO 2005/024645

(57) **Abstract**

An information-processing server (30) (a) receives an action request with first level private information from a first terminal (20); (b) authenticates the first terminal (20) based on the first level private information; (c) issues authentication information to the first terminal (20); (d) receives from the first terminal (20) second level private information of a higher security level than the first level private information as well as the authentication information; and (e) transmits the second level private information for an action requested, to a second terminal (51) based on the authentication information, in a system including the first terminal (20), the second terminal (51), and the information-processing server (30) mediating between the first terminal (20) and the second terminal (51).

## Description

### BACKGROUND OF THE INVENTION

### 1. Field of the Invention

The present invention relates to technology of carrying out electronic business transactions while protecting private information in a so-called "ubiquitous" communication environment allowing information communication anywhere at any time. It is particularly related to an information processing method utilizing authentication information and an information-processing server used for this information processing method. Furthermore, it is related to technology for implementing interchangeability and the like for communication of image information between heterogeneous communication terminals.

### 2. Description of the Related Art

Presently, information communication is becoming possible anywhere at any time through wide use of the Internet and portable terminals. Therefore, various encryptions preventing communicated information from being leaked out to third parties have been studied and developed, and transmission of information to a server utilizing a protocol such as encrypted Hypertext Transfer Protocol Security (HTTPS) is also frequently carried out. Therefore, various encryptions have been developed so as to prevent communicated information from being leaked out to third parties. A private key method, a public key method, or the like is used as an encryption method. In the case of simply transmitting information from a sender to a receiver, there is not much concern of such transmission as long as an encryption key is decided between the sender and the receiver, and the encryption is thus not deciphered. However, with electronic business transactions or the like, a server to authenticate private information and a server to carry out the actual business transaction are most often different. Furthermore, the network becomes complex and the number of servers involved in processing increases when various pieces of information are communicated at the same time. However, if all of the information is encrypted at once, all of it needs to be decrypted at an intermediate server, resulting in conceivable disclosure of even unnecessary information for that server. A method of protecting information by allowing access to only necessary information to be processed by a plurality of servers is not yet available.

Since standard communication protocols are determined for portable terminals by communication carriers, a server is capable of authenticating the portable terminals with high accuracy by acquiring device identifiers identifying the respective portable terminals, for example; however, authentication of a computer or the like is difficult in a communication network such as the Internet. In other words, according to a browser and a protocol such as a hypertext transfer protocol (HTTP) used for connecting the computer to the Internet or the like, acquiring an identifier to identify the computer and transmit it to the server is impossible, as with the portable terminal. In actuality a method for storing an encrypted cipher text generated in a cookie of a browser by a server, transmits the cipher text to the server at the time of authentication, and prompts the user to enter a password when connecting to the server.

As disclosed in Japanese Patent Application Laid-open No. 2003-6164, there is an authentication system or the like including a user information database connected to an affiliated site on the Web via a network and stored with authentication information of the user permitted to access the affiliated site, and control means (module) configured to acquire the authentication information input to the affiliated site, carry out authentication based on the user information database, and transmit authentication results to the affiliated site.

In addition, a communication terminal with a two-dimensional code read-in function is developed, allowing the communication terminal to take in two-dimensional code image information. Furthermore, some communication terminals have a built-in two-dimensional code generating function. Accordingly, displaying on a communication terminal screen an image obtained by converting the information to two-dimensional codes and reading that image by another communication terminal allows transfer of the information between the communication terminals (see Shoko GOTO, "ZDNet/JAPAN", [online], July 15, 2003, [retrieved on Sept. 22, 2003], Internet <URL; http://www.zdnet.co.jp/mobile/0307/15/n qrprint.html>.)

### SUMMARY OF THE INVENTION

With a ubiquitous computing system, a personal computer or a mobile phone is not necessarily always required. Generally, the ubiquitous computing system is implemented by automatic identification tags made up of a subscriber identifying means (module) (SIM) card, an IC chip, or a radio frequency identification (RFID) tag, a wearable computer, and a meta server made up of a plurality of servers. In such environment, security and protection of private information becomes extremely important. Particularly, with a wearable computer, since a user may carry around information not wanted to be known to third parties, when transmitting such private information, implementation of a system safely carrying out transmission/ reception of information among parties concerned without being revealed to third parties is important. However, a standard method of protecting private information for communication by next-generation wearable computers in a ubiquitous environment does not exist. Furthermore, there is a problem of insufficient memory capacity as the amount of information to be stored in a memory region of the wearable computer tends to increase.

However, while with an invention disclosed in Japanese Patent Application Laid-open No. 2003-6164, authentication of a plurality of affiliated sites is unnecessary as long as an authentication system is authenticated; in the case of authentication of the authentication system being intercepted, loss by the user may be overwhelming.

On the other hand, along with popularization of portable terminals such as mobile phones, there are many users enjoying various services using the mobile phones, where private information such as name and address may be registered at the time of service provision. In this case, registering the private information using the portable terminal lacking in an inputting user interface is extremely difficult, and thus there are many users wanting to register using a computer. However, there is a problem with registering using a computer at the time of user authentication as described above, and development of a system conquering this problem is desired.

Since a two-dimensionally encoded information description method is different among different communication terminal models, even though the communication terminals of respective dissimilar models can read an image, correct data format thereof is destroyed. Accordingly, in order to use all functions of the communication terminals, the output side and the read-in side should be of the same model. Therefore, development of a system providing interchangeability among models is desired.

An object of the present invention is to provide an information processing method for electronic business transactions while concealing data such as private information from third parties during communication using next-generation wearable computers in a ubiquitous environment, and to provide an information-processing server used for this information processing method.

In order to achieve the above-given object, a first aspect of the present invention inheres in an information-processing server used in an information processing system to authenticate a communication terminal not including authentication information based on authentication information stored in an authentication terminal. In other words, according to the first aspect of the present invention, the information-processing server includes: (a) an authentication information storage unit configured to store the authentication information; (b) an authentication image generating module configured to receive an authentication request for the communication terminal, (c) generate an authentication parameter, generate an authentication image including the authentication parameter and transmit it to the communication terminal, and then store the authentication parameter in an authentication parameter storage unit; (d) an authentication information acquiring module configured to acquire from the authentication terminal, information of the authentication image acquired from the communication terminal and (e) the authentication information stored in the authentication terminal; and (f) an authentication information verifying module configured to access the authentication parameter storage unit, determine that the information of the authentication image acquired by the authentication information acquiring module is information of an image generated by the image generating module, and determine whether or not the authentication information stored in the authentication terminal matches the authentication information stored in the authentication information storage unit, and then transmit those results to the communication terminal.

A second aspect of the present invention inheres in an information processing method used by an information processing system to authenticate a communication terminal not including authentication information based on authentication information stored in an authentication terminal. In other words, according to the second aspect of the present invention, an information processing method includes the steps of: (a) storing the authentication information in an authentication information storage unit; (b) receiving an authentication request for the communication terminal; (c) generating an authentication parameter, generating an authentication image including the authentication parameter and transmitting it to the communication terminal, and storing the authentication parameter in an authentication parameter storage unit by the authentication image generating module; (d) acquiring from the authentication terminal, information of the authentication image acquired from the communication terminal and (e) the authentication information stored in the authentication terminal using the authentication information acquiring module; and (f) verifying the authentication information by accessing the authentication parameter storage unit, determining that the information of the authentication image is information of an image provided through generating the authentication image, and determining whether or not the authentication information stored in the authentication terminal matches the authentication information stored in the authentication information storage unit, and transmitting those results to the communication terminal.

A third aspect of the present invention inheres in an information-processing server including an identifier correspondence information storage unit configured to store correspondence information retrieved by a communication terminal identifier, and an information converting module configured to convert information entered from a communication terminal in conformity with the correspondence information.

A fourth aspect of the present invention inheres in an information processing method used in a system including a first terminal, a second terminal, and an information-processing server mediating between the first terminal and the second terminal. In other words, with the information processing method according to the fourth aspect of the present invention, the information-processing server: (a) receives an action request as well as first level private information from the first terminal; (b) authenticates the first terminal based on the first level private information; (c) issues authentication information to the first terminal; (d) receives from the first terminal second level private information of a higher security level than the first level private information as well as the authentication information; and (e) transmits the second level private information for an action requested, to the second terminal based on the authentication information.

### BRIEF DESCRIPTION OF THE DRAWINGS

FTG. 1 is a data flow diagram describing an information processing system according to a first embodiment of the present invention;
FIG. 2 is a data flow diagram describing a first encryption key acquisition system using an information protection method according to the first embodiment of the present invention;
FIG. 3 is a data flow diagram describing a second encryption key acquisition system using the information protection method according to the first embodiment of the present invention;
FIG. 4 is a data flow diagram describing an information processing system for an electronic business transaction according to a second embodiment of the present invention;
FIG. 5 is a data flow diagram describing an information processing system for information communication within a community according to a third embodiment of the present invention;
FIG. 6 is a data flow diagram describing an encryption key acquisition system according to a fourth embodiment of the present invention;
FIG. 7 is a flowchart showing an encryption key acquisition method according to the fourth embodiment of the present invention;
FIG. 8 is a diagram schematically showing an encryption key acquisition method according to a fifth embodiment of the present invention;
FIG. 9 is a flowchart showing the encryption key acquisition method according to the fifth embodiment of the present invention;
FIG. 10 is a diagram schematically showing an encryption key acquisition method according to a sixth embodiment of the present invention;
FIG. 11 is a flowchart showing the encryption key acquisition method according to the sixth embodiment of the present invention;
FIG. 12 shows a function block diagram of an information-processing server according to a seventh embodiment of the present invention and a system block diagram of an information processing system used by the information-processing server;
FIG. 13 is a sequence diagram showing an information processing method according to the seventh embodiment of the present invention;
FIG. 14 shows a function block diagram of an information-processing server according to an eighth embodiment of the present invention and a system block diagram of an information processing system using the information-processing server;
FIG. 15 is a sequence diagram showing an information processing method according to the eighth embodiment of the present invention;
FIG. 16 is a sequence diagram showing an information processing method according to a modification of the eighth embodiment of the present invention;
FIG. 17 shows a function block diagram of an information-processing server according to a ninth embodiment of the present invention and a system block diagram of an information processing system using the information-processing server;
FIG. 18 shows an exemplary question list and a selection list for those questions presented to a user by the information processing system according to the ninth embodiment of the present invention;
FIG. 19 is a diagram showing combinations for the case of authentication using related art passwords;
FIG. 20 is a sequence diagram showing an information processing method according to the ninth embodiment of the present invention;
FIG. 21 shows a function block diagram of an information-processing server according to a tenth embodiment of the present invention and a system block diagram of an information processing system using the information-processing server;
FIG. 22 is a sequence diagram showing an information processing method according to the tenth embodiment of the present invention;
FIG. 23 shows a function block diagram of an information-processing server according to an eleventh embodiment of the present invention and a system block diagram of an information processing system using the information-processing server;
FIG. 24 is a sequence diagram showing an information processing method according to the eleventh embodiment of the present invention when communication is authorized;
FIG. 25 is a sequence diagram showing the information processing method according to the eleventh embodiment of the present invention when communication is denied;
FIG. 26 is a system block diagram of an information processing system according to a twelfth embodiment of the present invention;
FIG. 27 is a flowchart describing the information processing method according to the twelfth embodiment of the present invention;
FIG. 28 is a flowchart for the information processing method according to the twelfth embodiment of the present invention focusing on an information-processing server;
FIG. 29 is a flowchart describing an information processing method according to a modification of the twelfth embodiment of the present invention;
FIG. 30 is a diagram schematically describing a flow of an information processing method according to another modification of the twelfth embodiment of the present invention;
FIG. 31 is a diagram schematically describing a flow of an information processing method according to yet another modification of the twelfth embodiment of the present invention;
FIG. 32 is a diagram schematically describing a flow of an information processing method according to yet another modification of the twelfth embodiment of the present invention;
FIG. 33 is a system block diagram of an information processing system according to a thirteenth embodiment of the present invention;
FIG. 34 is a flowchart describing the information processing method according to the thirteenth embodiment of the present invention;
FIG. 35 is a flowchart for the information processing method according to the thirteenth embodiment of the present invention focusing on an information-processing server;
FIG. 36 is a system block diagram of an information processing system according to a fourteenth embodiment of the present invention;
FIG. 37 is a flowchart describing an information processing method according to the fourteenth embodiment of the present invention;
FIG. 38 is a flowchart for the information processing method according to the fourteenth embodiment of the present invention focusing on an information-processing server;
FIG. 39 is a flowchart describing an information processing method according to a modification of the fourteenth embodiment of the present invention;
FIG. 40 is a diagram schematically describing a flow of an information processing method according to another modification of the fourteenth embodiment of the present invention; and

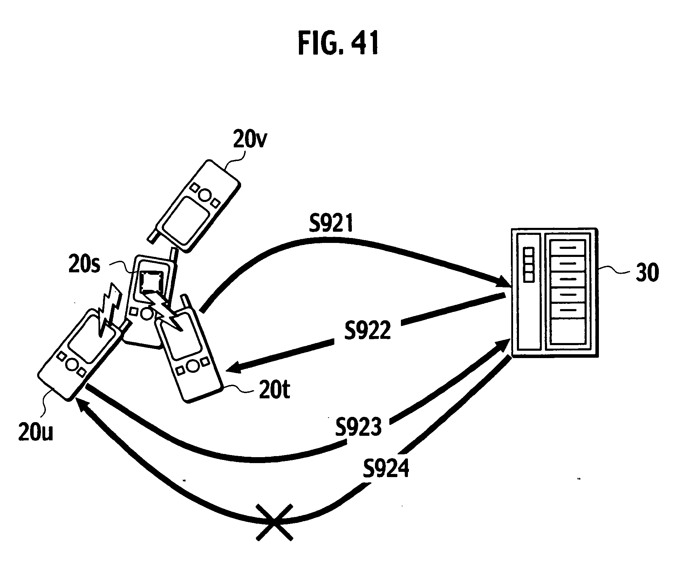

FIG. 41 is a diagram schematically describing a flow of an information processing method according to yet another modification of the fourteenth embodiment of the present invention.

### DETAILED DESCRIPTION OF THE INVENTION

A first through a fourteenth embodiment of the present invention are described forthwith with reference to the appended drawings. The same or similar reference numerals are attached to the same or similar parts in the following drawing descriptions. However, those drawings are merely schematics and ratios of dimensions may be inconsistent with reality. Accordingly, a specific structure is to be understood with making allowances for the following description. Needless to say, parts differing in relationship and ratio of dimensions among the drawings are included.

### (FIRST EMBODIMENT)

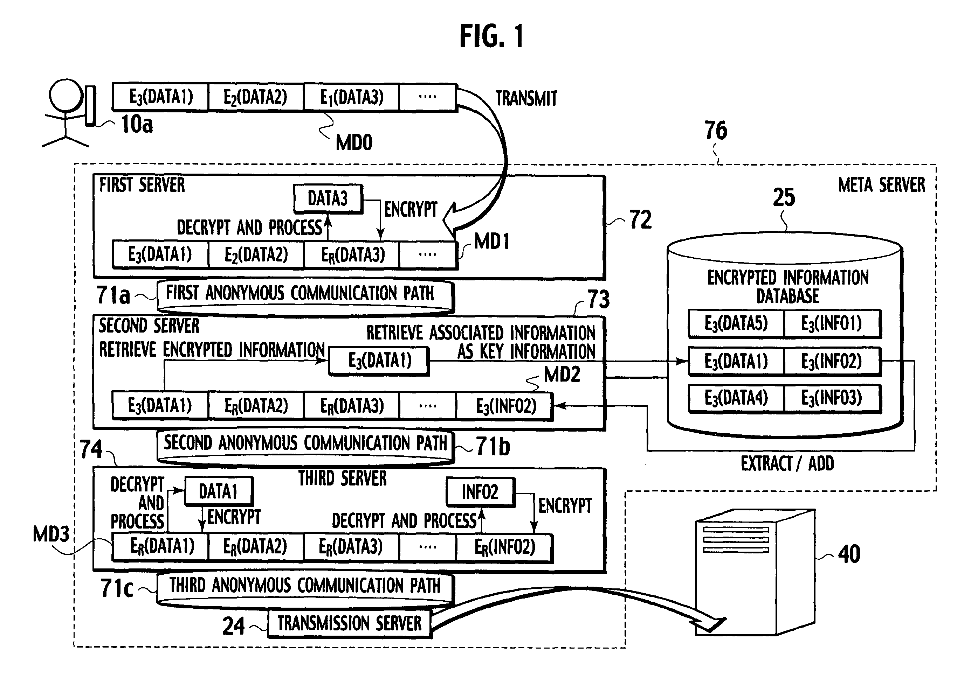

A private information protection method according to a first embodiment of the present invention is described while referencing FIG. 1, FIG. 2, and FIG. 3. "En(X)" in FIG. 1 denotes information generated by encrypting data X using an encryption key and can be decrypted by an n-th server. "E3(DATA1)", for example, denotes information generated by encrypting DATA1 using an encryption key and can be decrypted by a second server 74. In FIG. 1, a case with n = 3 is exemplified.

First, a ubiquitous computing system shown in FIG. 1 includes a portable information terminal 10a, which plays a role as a first wearable computer that a user utilizes, a meta server 76, which is made up with a plurality of servers processing transmission source metadata MD0 transmitted from the first wearable computer (portable information terminal) 10a, and a transmission destination server R40. The meta server 76 is assumed to include a group of servers such as a first server 72, a second server 73, a second server 74, and a transmission server 24, a first anonymous communication path 71a, a second anonymous communication path 71b, and a third anonymous communication path 71c, which connect between respective servers, and an encrypted information database 25 connected to the second server 73. In reality, there is no limitation on the number of servers, the number of transmission paths, and the number of databases. "Anonymous communication path" denotes a communication path that prevents transmitted packet information from being read by third parties, and may be a LAN cable connection communication path, a wireless connection communication path, or a dedicated line connection communication path.

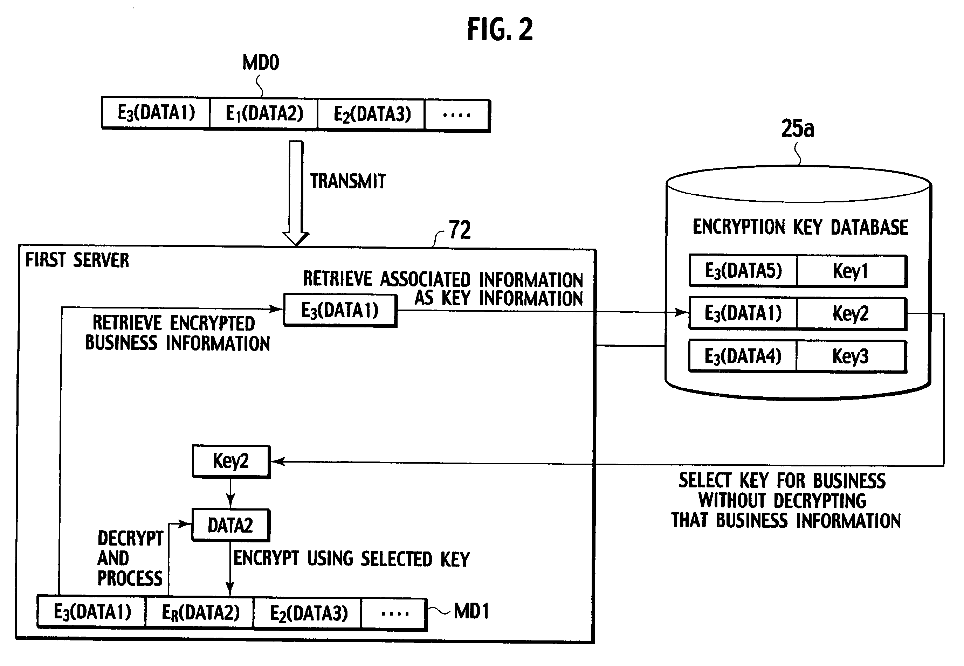

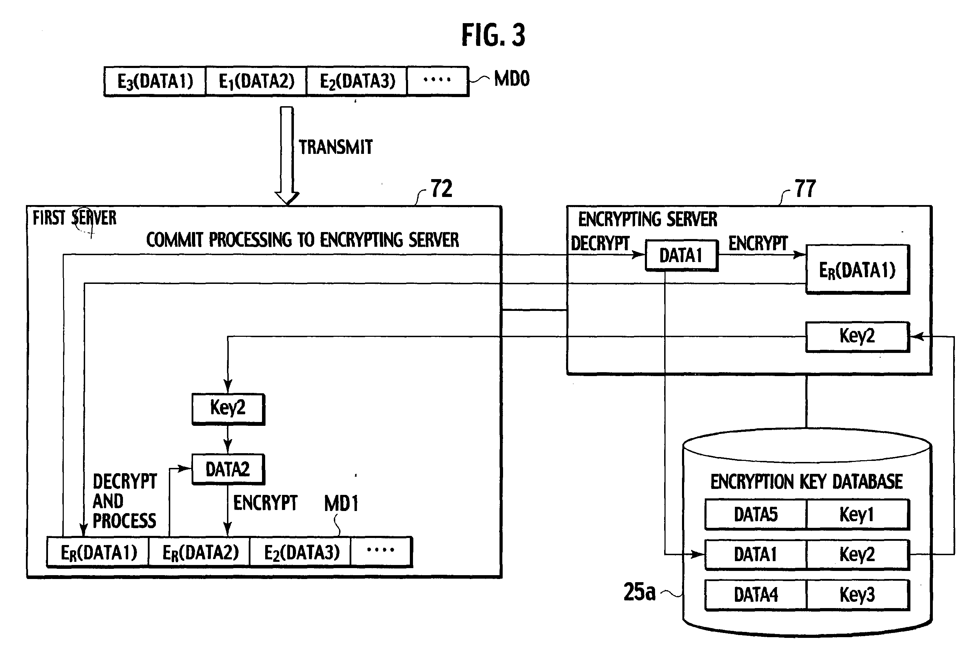

An information protection method is described forthwith while referencing FIG. 1.
(a) The first wearable computer (portable information terminal) 10a generates a first encrypted information E1 (DATA3) by encrypting first information data DATA3 using an encryption key that allows only the first server 72 to decrypt, generates a second encrypted information E2 (DATA2) by encrypting second information data DATA2 using an encryption key that allows only the second server 73 to decrypt, and generates a third encrypted information E3 (DATA1) by encrypting third information data DATA1 using an encryption key that allows only the second server 74 to decrypt while the meta server 76 receives transmission source metadata MD0. The DATA1, DATA2, DATA3, ... may be information such as private authentication information, terminal information, transmission destination information, merchandise information, mail information, or image information.
(b) Upon reception of the transmission source metadata MD0, the first server 72 detects decryptable information necessary for the first server 72. Since there is E1 (DATA3) in FIG. 1, it is decrypted to DATA3, which is then processed. Afterwards, it is encrypted again and replaced with the resulting ER(DATA3), allowing the transmission destination server R40 to decrypt the DATA3. Afterwards, the first transmission metadata MD1 is generated and then transferred to the second server 73 via the first anonymous communication path 71a. Since other information cannot be decrypted by the first server 72, it is concealed from the first server 72. Note that an encryption key acquisition method for encrypting that allows other servers to decrypt is described later while referencing FIGS. 2 and 3.
(c) The second server 73 having received the first transmission metadata MD1 detects decryptable information necessary for the second server 73 to process it. Since there is E2(DATA2) shown in FIG. 1, it is then decrypted using the same method as that used by the first server 72, providing the DATA2, which is then processed (not shown in the drawing). Afterwards, the DATA2 is encrypted again and replaced with the resulting ER(DATA2), allowing the transmission destination server R40 to decrypt it. The second server 73 also conducts processing such as adding information using information that cannot be decrypted to know the content thereof. In FIG. 1, E3(DATA1) is decrypted by the second server 74, and the n+1-th encrypted information E3(INFO2) is then retrieved from the encrypted information database 25, which is connected to the second server 73, using this E3(DATA1) as key information. The resulting E3(INFO2) is then added forming a second transmission metadata MD2, which is then transmitted to the second server 74 via the second anonymous communication path 71b.
(d) The second server 74 having received the second transmission metadata MD2 detects decryptable information necessary for the second server 74 to process. In FIG. 1, since there are E3(DATA1) and E3(INFO2), these are then decrypted, using the same method as that used by the first server 72, to DATA1 and INFO2, which are then processed. Afterwards, the DATA1 and INFO2 are encrypted again and replaced with the ER(DATA1) and the ER(INFO2), allowing the transmission destination server R40 to encrypt them. The third transmission metadata MD3 is generated and transferred to a transmission server 24 via the third anonymous communication path 71c.
(e) The transmission server 24 transmits the third transmission metadata MD3 to the transmission destination server R40 outside of the meta server 76 in conformity with a transmission address. The information in the final third transmission metadata MD3 has gone through and been encrypted by the first server 72, the second server 73, and the second server 74 so that it can be decrypted by the transmission destination server R40.

An encryption key acquisition method for re-encrypting, which allows other servers to decrypt, is described forthwith.

According to an exemplary encryption key acquisition method shown in FIG. 2, the first server 72 having received the transmission source metadata MD0 decrypts the E1(DATA2) to DATA2. Subsequently, using as a retrieval key E3(DATA1) (i.e., encrypted business information shown in FIG. 2), which is information of an another server going to reuse the DATA2, to obtain a key for that another server to encrypt, the first server 72 retrieves an encryption key "Key2" from an encryption key database 25a connected to that server. It then encrypts the DATA2 to ER(DATA2) using this "Key2", forming the first transmission metadata MD1. Since the first server 72 cannot decrypt only using the E3(DATA1) as is as a retrieval key, the content of the DATA1 is concealed from the first server 72.

According to an encryption key acquisition method of another working example shown in FIG. 3, the first server 72 having received the transmission source metadata MD0 decrypts the E1(DATA2) to DATA2. Subsequently, it transmits only E3(DATA1), which is information of another server reusing the DATA2, to an encrypting server 77 so as to obtain a key for that another server to encrypt. The encrypting server 77 decrypts the E3(DATA1) to DATA1. It then retrieves an encrypting key "Key2" from the encryption key database 25a using the DATA1 as a retrieval key. It then encrypts the DATA1 to ER(DATA1) using this "Key2" and returns it to the first server 72.

The first server 72 replaces the ER(DATA1) for the E3(DATA1). Moreover, the first server 72 conducts processing such as receiving the "Key2" from the encrypting server 77 and then encrypting the DATA2 to ER(DATA2).

According to a working example shown in FIG. 3, the content DATA1 of the E3(DATA1) is concealed from the first server 72. Moreover, since only E3(DATA1) is transmitted to the encrypting server 77, other information is concealed from the encrypting server 77.

According to the first embodiment of the present invention, each server is capable of decrypting and knowing information necessary for the server to process. Since other information can be kept concealed even after being received, even a server in the meta server 76 cannot unnecessarily access it. Therefore, security for private information or the like is ensured, providing secure ubiquitous computing.

### (SECOND EMBODIMENT)

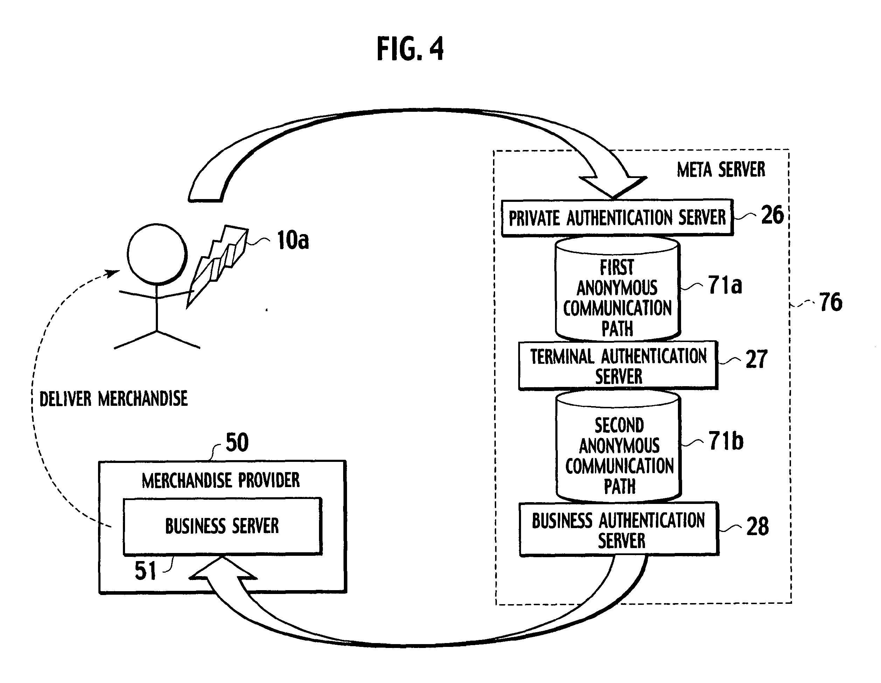

FIG. 4 shows a flow of an electronic business transaction for ubiquitous computing using a wearable computer (portable information terminal) in a mobile environment as a specific example of a private information protection method according to a second embodiment of the present invention. An electronic business transaction system shown in FIG. 4 is made up of a first wearable computer (portable information terminal) 10a, a meta server 76 constituted by a private authentication server 26, a terminal authentication server 27, and a business authentication server 28, a first anonymous communication path 71a connected to the private authentication server 26 and the terminal authentication server 27, a second anonymous communication path 71b connected to the terminal authentication server 27 and the business authentication server 28, a merchandise provider 50, and a business server 51 possessed by the merchandise provider 50.

An exemplary processing flow is given forthwith.
(a) First, private information, terminal information, business information, merchandise information and the like are transmitted to the meta server 76 from the first wearable computer (portable information terminal) 10a.
(b) The private authentication server 26 decrypts only the private information in received metadata and then authenticates private identification. The private authentication server 26 cannot know any other information.
(c) The terminal authentication server 27 then decrypts only the terminal information in the metadata received via the first anonymous communication path 71a and authenticates terminal identification. The terminal authentication server 27 cannot access any other information.
(d) The business authentication server 28 then decrypts only the business information in the metadata received via the second anonymous communication path 71b and authenticates business identification. The business authentication server 28 cannot access any other information.
(e) When necessary authentication for the meta server 76 is completed, the metadata is transmitted to the business server 51 possessed by the merchandise provider 50. Upon confirmation of decryption and read-in of the private information and the merchandise information necessary for the business transaction, the business server 51 delivers merchandise and the business transaction is then completed.

According to the second embodiment of the present invention, in the flow shown in FIG. 4, each of the private authentication server 26, the terminal authentication server 27, the business authentication server 28 of the meta server 76 cannot know what the user has purchased, let alone know with which merchandise provider 50 the business transaction is conducted. In this manner, necessary authentication may be carried out while conducting an electronic business transaction with private information kept concealed.

### (THIRD EMBODIMENT)

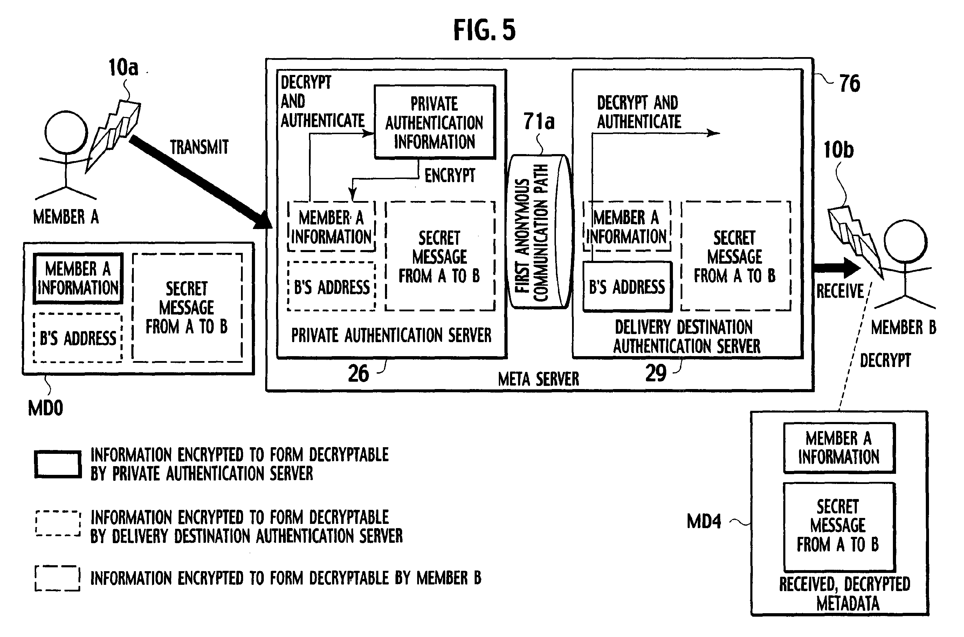

FIG. 5 shows a flow of information communication within a community in a mobile environment as a specific example of a private information protection method according to a third embodiment of the present invention. An information communication system shown in FIG. 5 is made up of a first wearable computer (portable information terminal) 10a and a second wearable computer (portable information terminal) 10b, a meta server 76 constituted by a private authentication server 26 and a delivery destination authentication server 29, and a first anonymous communication path 71a provided between the private authentication server 26 and the delivery destination authentication server 29.

An exemplary processing flow is given forthwith.
(a) Transmission source data MD0 including the following information is transmitted from the first wearable computer (portable information terminal) 10a (member A):
   (i) Member A information encrypted to a form decryptable by the private authentication server 26;

   (i) Member B address encrypted to a form decryptable by the delivery destination authentication server 29; and
   (iii) A secret message encrypted to a form decryptable by the second wearable computer (portable information terminal) 10b (member B).
(b) The private authentication server 26 of the meta server 76 decrypts the member A information in the received transmission source data MD0 and then conducts private authentication. Afterwards, the member A information is re-encrypted to a form decryptable by the second wearable computer 10b and substituted therewith. The generated metadata is then transmitted to the delivery destination authentication server 29.
(c) The delivery destination authentication server 29 receives the metadata via the first anonymous communication path 71a. The member B address encrypted to a decryptable form is decrypted by the delivery destination authentication server 29 and then authenticates whether or not the member B is a member of the community. When it is authenticated, the delivery destination authentication server 29 transmits the metadata to the second wearable computer 10b.
(d) The second wearable computer 10b decrypts the received metadata to generate metadata MD4, and then displays the member A information and the secret message or notifies the user by a sound or the like.

According to the third embodiment of the present invention, since the transmission source is authenticated by the private authentication server 26 of the meta server 76 and the transmission destination is authenticated by the delivery destination authentication server 29, information communication may be limited among members of the closed community. Not only can remarks from outsiders be blocked, accidental transmission of information to outsiders and having it read is also prevented. Furthermore, the private authentication server 99 cannot know the transmitter, and the delivery destination authentication server 29 cannot know the transmission source. Accordingly, this is excellent for protecting private information since transactions may be conducted among servers of the closed meta server 76 with private information kept concealed from one another.

### (FOURTH EMBODIMENT)

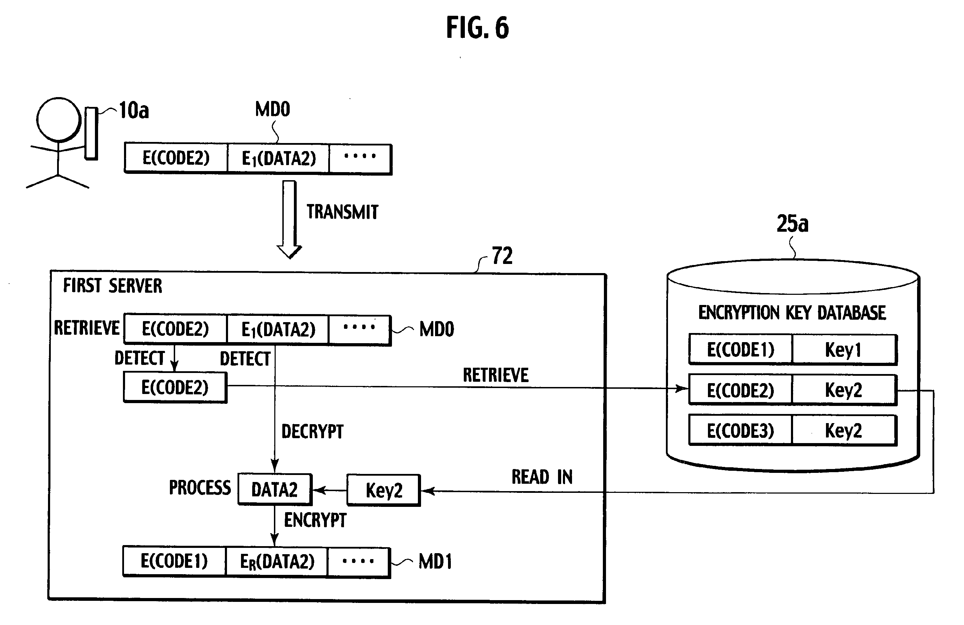

As shown in FIG. 6, an encryption key acquisition system according to a fourth embodiment of the present invention is organized by a first wearable computer (portable information terminal) 10a used by a user, a first server 72 configured to process transmission source metadata MD0 transmitted from the first wearable computer 10a, and an encryption key database 25a connected to the first server 72. However, the first server 72 is described as an arbitrary server in the meta server made up of a plurality of servers.

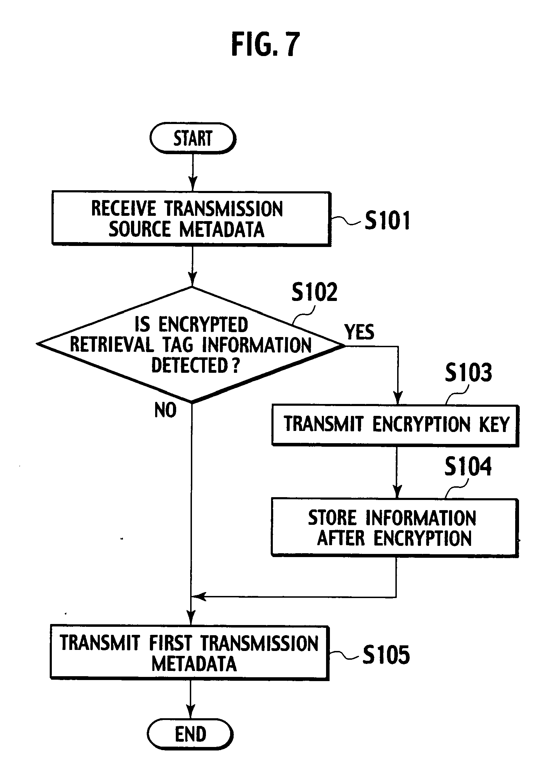

An exemplary processing flow for an encryption key acquisition method according to the fourth embodiment of the present invention is described forthwith while referencing FIG. 7.
(a) First, in step S101, the first server 72 receives the transmission source metadata MD0 including encrypted retrieval tag information E(CODE), which results from encrypting retrieval tag information CODE generated using a fixed random number RN stored in memory of the first wearable computer 10a.
(b) Next, in step S102, the encrypted retrieval tag information E(CODE2) is retrieved from the transmission source metadata MD0.
(c) If the encrypted retrieval tag information E(CODE2) is not detected in step S102, first transmission metadata is transmitted to subsequent servers in step S105.
(d) Meanwhile, if the encrypted retrieval tag information E(CODE2) is detected in step S102, encryption key data Key2, which is information associated to the encrypted retrieval tag information E(CODE2) in advance, is transmitted to the first server 72 from the database 25a in step S103. Next, the first server 72 decrypts E1(DATA2) and processes the DATA2, and then in step S104, encrypts the DATA2 to information ER (DATA2) readable by a server R using the data "Key2" and stores it in first transmission metadata MD1. In step S105, the first server 72 then transfers the first transmission metadata MD1 to subsequent servers.

"CODE2" shown in FIG. 6 is the retrieval tag information and is generated using the fixed random number RN, which is recorded in a memory region of the first wearable computer 10a. The fixed random number RN is unique data characteristic to each wearable computer and has a specified size such as 8 bits, 16 bits, 32 bits, or 64 bits, for example. While the fixed random number RN may be used as is as the retrieval tag information CODE2, it may be data processed using information stored in the first wearable computer 10a such as an address, a phone number, a date, a time or a name recorded in the wearable computer 10a. "E(CODE2)" is data resulting from encrypting the retrieval tag information. As means (module) for encrypting the retrieval tag information CODE2, random numbers may be generated using the information stored in the first wearable computer 10a such as an address, a phone number, a date, a time, or a name.

According to the fourth embodiment of the present invention, each server is capable of deciphering and knowing information necessary for the server to process. Since other information can be kept concealed even though received, even the servers in the meta server 76 cannot unnecessarily access it. Therefore, security for private information or the like is ensured, providing secure ubiquitous computing. Furthermore, since the fixed random number RN is converted to meaningful data for the first time on the receiving server side, security may be further improved. Moreover, since the necessary private information is managed on the server side and the data size of the fixed random number RN can be small, saving used areas of memory in the first wearable computer 10a is possible.

### (FIFTH EMBODIMENT)

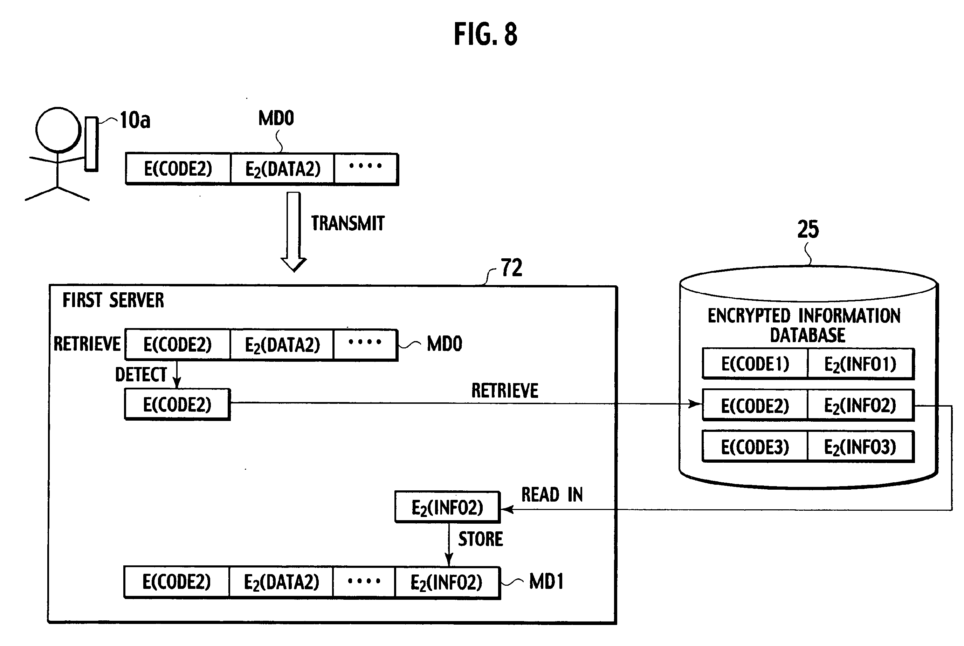

As shown in FIG. 8, an encryption key acquisition system according to a fifth embodiment of the present invention is organized by a first wearable computer (portable information terminal) 10a used by a user, a first server 72 configured to process transmission source metadata MD0 transmitted from the first wearable computer 10a, and an encrypted information database 25 connected to the first server 72. However, the first server 72 is described as an arbitrary server in the meta server made up of a plurality of servers.

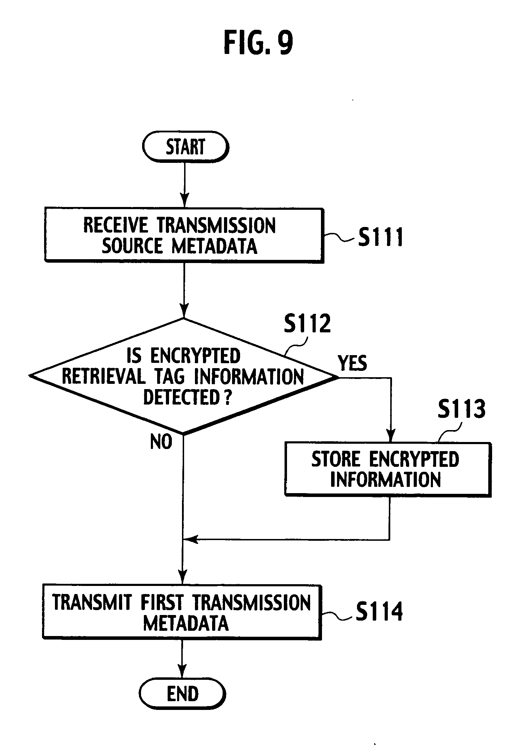

An exemplary processing flow for an encryption key acquisition method according to the fifth embodiment of the present invention is described forthwith while referencing FIG. 9.
(a) First, in step S111, the first server 72 receives the transmission source metadata MD0 including encrypted retrieval tag information E(CODE), which results from encrypting retrieval tag information CODE generated using a fixed random number RN stored in memory of the first wearable computer 10a.
(b) Next, in step S112, the encrypted retrieval tag information E(CODE2) is retrieved from the transmission source metadata MD0.
(c) If the encrypted retrieval tag information E(CODE2) is not detected in step S112, first transmission metadata MD1 is transmitted to subsequent servers in step S114.
(d) Meanwhile, when the encrypted retrieval tag information E(CODE2) is detected in step S112, encrypted information E2(INFO2), which is information associated to the retrieval tag information CODE2 in advance, is stored in first transmission metadata MD1 in step S113. In step S114, the first transmission metadata MD1 is transferred to the servers in subsequent stages. However, the encrypted information E2(INFO2) is readable by the second stage server, but may be information needed for processing by another server as well.

According to the fifth embodiment of the present invention, each server is capable of deciphering and knowing information necessary for the server to process. Since other information can be kept concealed even though received, even the servers in the meta server 76 cannot unnecessarily access it. Therefore, security for private information or the like is ensured, providing secure ubiquitous computing. Furthermore, since the fixed random number RN is converted to meaningful data for the first time on the receiving server side, security may be further improved. Moreover, since the necessary private information is managed on the server side and the data size of the fixed random number RN can be small, saving used areas of memory in the first wearable computer 10a is possible.

### (SIXTH EMBODIMENT)

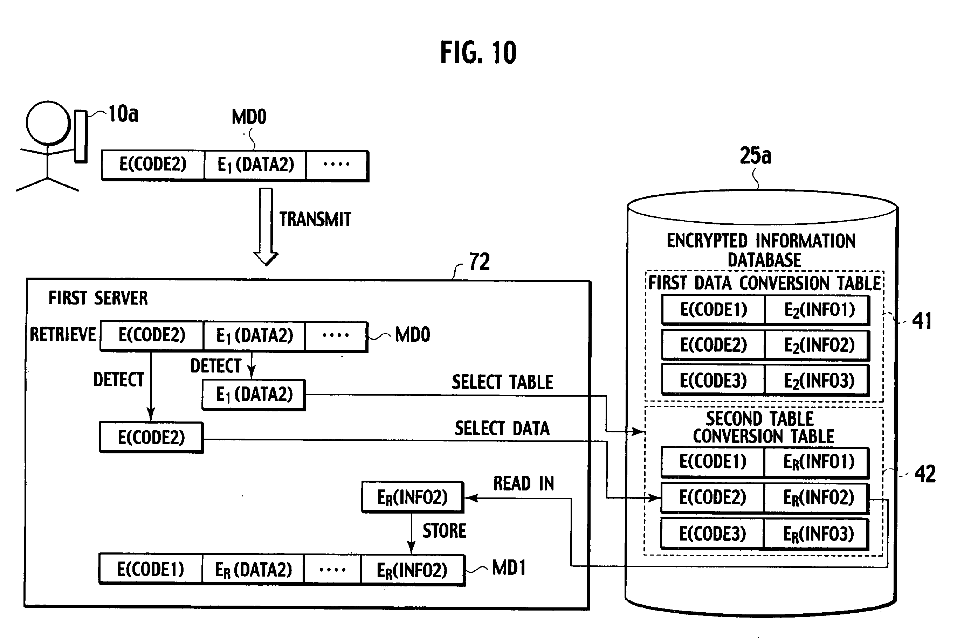

As shown in FIG. 10, an encryption key acquisition system according to a sixth embodiment of the present invention is organized by a first wearable computer (portable information terminal) 10a used by a user, a first server 72 configured to process transmission source metadata MD0 transmitted from the first wearable computer 10a, and an encrypted information database 25 connected to the first server 72. However, the first server 72 is described as an arbitrary server in the meta server made up of a plurality of servers. Here, "E1(DATA2)" shown in FIG. 8 is described as service information. The service information includes information necessary for merchandise or service transactions, and may be merchandise information such as size and color, business information, or delivery information.

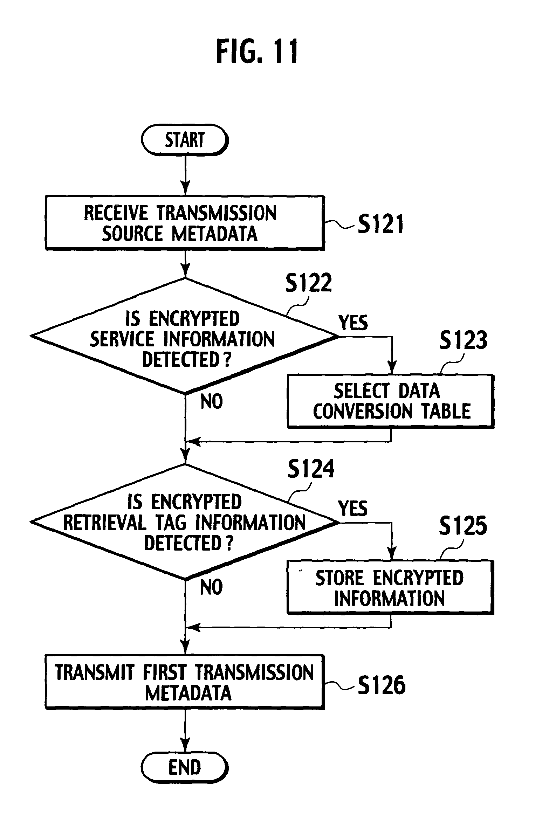

An exemplary processing flow for an encryption key acquisition method according to the sixth embodiment of the present invention is described forthwith while referencing FIG. 11.
(a) First, in step S121, the first server 72 receives the encrypted information E1(DATA2), which results from encrypting the service information, and the transmission source metadata MD0 including encrypted retrieval tag information E(CODE2), which results from encrypting retrieval tag information CODE2 generated using a fixed random number RN stored in memory of the first wearable computer 10a. However, data such as two-dimensionally encoded information acquired by the first wearable computer 10a through optical reading is available as the service information.
(b) Next, in step S122, the encrypted information and the encrypted retrieval tag information are retrieved from the transmission source metadata MD0.
(c) If the encrypted information E1(DATA2) is detected in step S122, a second data conversion table 42 associated to the encrypted information E1(DATA2) in advance is selected. In step S124, the first server 72 then retrieves the encrypted retrieval tag information from the transmission source metadata MD0. Meanwhile, if the encrypted information E1(DATA2) is not detected, the first server 72 retrieves the encrypted retrieval tag information as is from the transmission source metadata MD0 in step S124.
(d) If the encrypted retrieval tag information E(CODE2) is not detected in step S124, the first transmission metadata MD1 is transmitted to servers in subsequent stages in step S126.
(e) Meanwhile, if the encrypted retrieval tag information E(CODE2) is detected in step S124, encrypted information E2(INFO2), which is information associated to the retrieval tag information CODE2 in advance, is stored in the first transmission metadata MD1 in step S125. In step S126, the first transmission metadata MD1 is transferred to the servers in subsequent stages.

According to the sixth embodiment of the present invention, each server is capable of deciphering and knowing information necessary for the server to process. Since other information can be kept concealed even though received, even a server in the meta server 76 cannot unnecessarily access it. Therefore, security for private information or the like is ensured, providing secure ubiquitous computing.

Furthermore, since the retrieval tag information CODE2 generated by the wearable computer 10a is used as compared to the private information protection method for ubiquitous computing shown in FIG. 1, which transfers the transfer source metadata MD0 made up of private information, terminal information, business information, merchandise information and the like to the meta server 76, storage of the transmission source metadata MD0 in the wearable computer 10a is no longer necessary, thereby saving used areas of memory in the wearable computer 10a.

### (SEVENTH EMBODIMENT)

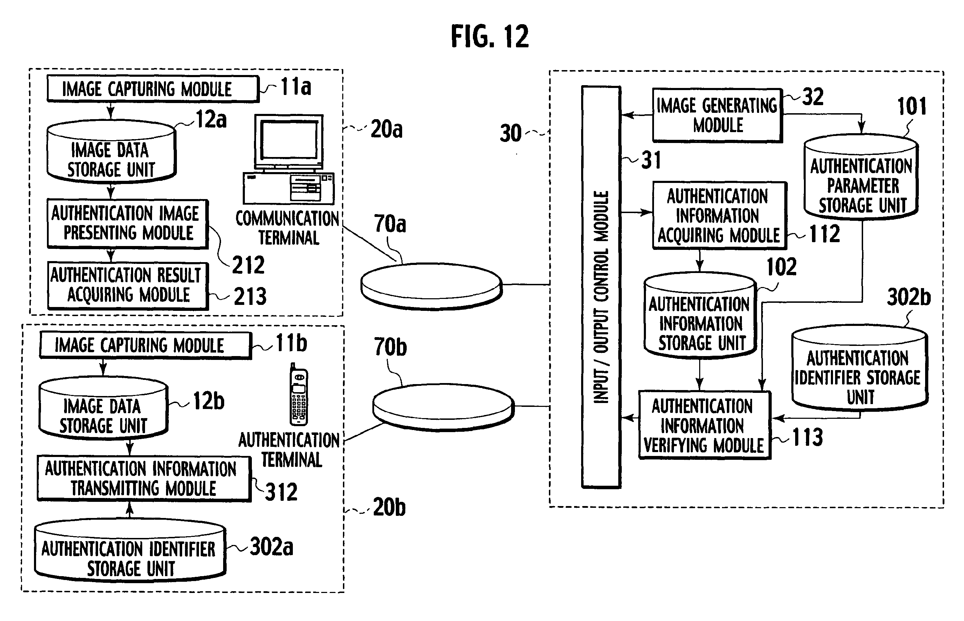

An information-processing server 30 according to a seventh embodiment of the present invention and an information processing system used by the information-processing server are described with reference to FIG. 12. The information-processing server 30 is implemented by installation of a software program for carrying out predetermined processing in a general purpose computer including a central processing control unit and memory.

The information-processing server 30 of the present invention authenticates a first communication terminal 20a not including authentication information using authentication information possessed by a second communication terminal (authentication terminal) 20b. In this case, the first communication terminal 20a is a general purpose computer, and the second communication terminal (authentication terminal) 20b is a communication terminal such as a mobile phone including authentication information. While the authentication information may be finger print authentication information, it is assumed as an encrypted, tamper-proof authentication identifier issued by the information-processing server 30, according to the seventh embodiment.

With the information processing system according to the seventh embodiment, the information-processing server 30 is connectable to the first communication terminal 20a via a first communication network 70a, and connectable to the second communication terminal (authentication terminal) 20b via a second communication network 70b. The first communication network 70a and the second communication network 70b are communication networks where a part of once does not join the other.

The information-processing server 30 according to the seventh embodiment includes an authentication parameter storage unit 101, an authentication information storage unit 102, an authentication information storage unit 302b, an image generating means (module) 32, an authentication information acquiring means (module) 112, an authentication information verifying means (module) 113, and an input/output control means (module) 31.

The authentication information storage unit 302b is a storage unit configured to store an authentication identifier (authentication information) for authenticating the second communication terminal (authentication terminal) 20b issued by the information-processing server 30.

The image generating means (module) 32 is a means for generating authentication parameters, generating an authentication image including the authentication parameters, transmitting it to the first communication terminal 20a, and then storing the authentication parameters in the authentication parameter storage unit 101 upon reception of an authentication request for the first communication terminal 20.

In this case, the authentication parameters generated by the image generating means (module) 32 and stored in the authentication parameter storage unit 101 are information including one or more of either a random number as a onetime password or a date that can be uniquely identified. The authentication parameter "date" may be the date of authentication parameter generation, or the date of reception of the authentication request for the first communication terminal 20a. In addition, an effective date or a date until which the authentication parameters are effective may also be stored in the authentication parameter storage unit 101. The image generating means (module) 32 transmits the authentication image to the first communication terminal 20a via the first communication network 70a. While the case where an authentication image is transmitted is described, it may be text as long as it can be deciphered by the second communication terminal (authentication terminal) 20b. In the case of text, it preferably has many digits so as not to be easily intercepted.

The authentication information acquiring means (module) 112 is a means for acquiring from the second communication terminal (authentication terminal) 20b the authentication image information acquired from the first communication terminal 20a and the authentication information included in the second communication terminal (authentication terminal) 20b, and then storing them in the authentication information storage unit 102. The authentication information acquiring means (module) 112 receives the authentication information from the second communication terminal (authentication terminal) 20b via the second communication network 70b. In this case, the authentication image information may be information obtained by the second communication terminal (authentication terminal) 20b decoding the authentication image acquired from the first communication terminal 20a, or it may be information generated by the information-processing server 30 decoding the authentication image acquired from the first communication terminal 20a and received from the communication terminal (authentication terminal) 20b. Furthermore, when acquiring the authentication image information from the first communication terminal 20a, the second communication terminal (authentication terminal) 20b may photograph and then decode the authentication image presented to the first communication terminal 20a. Alternatively, close range wireless communication such as infrared data communication between the first communication terminal 20a and the second communication terminal (authentication terminal) 20b may be utilized, or the second communication terminal (authentication terminal) 20b may acquire the authentication image using a removable disk.

The authentication information verifying means (module) 113 is a means for determining that the authentication image information acquired by the authentication information acquiring means (module) 112 is information of an image generated by the image generating means (module) 32, and whether or not the authentication information included in the second communication terminal (authentication terminal) 20b matches the authentication information stored in the authentication information storage unit 302b, and then transmitting those results to the first communication terminal 20a. Furthermore, in the case where an effective date of the authentication parameters is stored in the authentication parameter storage unit 101, if it is determined that the date acquired by the authentication information acquiring means (module) 112 is before the effective date of the authentication parameters stored in the authentication parameter storage unit 101, authentication may be authorized; otherwise if the date is not before the effective date of the authentication parameters authentication may be denied.

The input/ output control means (module) 31 is a means for controlling the information-processing server 30 to input and output, and transfer the resulting information to the respective networks and means (modules).

The first communication terminal 20a according to the seventh embodiment includes an image data storage unit 12a, an image capturing means (module) 11a, an authentication image presenting means (module) 212, and an authentication result acquiring means (module) 213.

The image capturing means (module) 11a is a means for acquiring the authentication image generated by the image generating means (module) 32 of the information-processing server 30 and storing it in the image data storage unit 12a. The authentication image presenting means (module) 212 is a means for providing the authentication image data stored in the image data storage unit 12a to the second communication terminal (authentication terminal) 20b.

Furthermore, the authentication result acquiring means (module) 213 is a means for acquiring authentication results transmitted from the authentication information verifying means (module) 113.

The second communication terminal (authentication terminal) 20b according to the seventh embodiment includes an image data storage unit 12b, an authentication information storage unit 302a, an image capturing means (module) 311, and an authentication information transmitting means (module) 312.

The image capturing means (module) 311 is a means for photographing the image presented by the authentication image presenting means (module) 212 of the first communication terminal 20a and storing it in the image data storage unit 12b. Any kind of means (module) may be used as long as the second communication terminal (authentication terminal) 20b can acquire the authentication image transmitted to the first communication terminal 20a without needing to photograph the image.

The authentication information transmitting means (module) 312 is a means for transmitting via the second communication network 70b to the information-processing server 30 the authentication identifier acquired from the information-processing server 30 and stored in the authentication information storage unit 302a and the image information stored in the image data storage unit 12b.

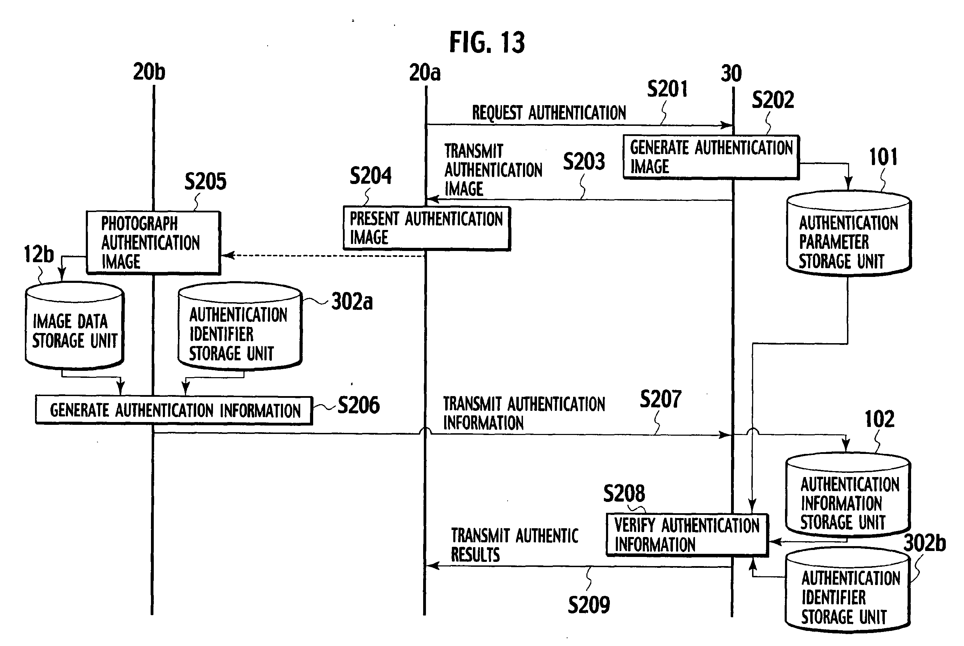

Next, an information processing method according to the seventh embodiment of the present invention is described with reference to FIG. 13.
(a) First, when the image generating means (module) 32 receives an authentication request from the first communication terminal 20a in step S201, the information-processing server 30 generates an authentication image including a onetime password or date and stores it in the authentication parameter storage unit 101. In step S203, the information-processing server 30 then transmits the generated authentication image to the first communication terminal 20a.
(b) Once the first communication terminal 20a receives the authentication image in step S203, the received image is presented in step S204.
(c) When the authentication image is presented by the first communication terminal 20a in step S204, the second communication terminal (authentication terminal) 20b photographs the presented authentication image and then stores it in the image data storage unit 12b in step S205. Furthermore, in step S206, the second communication terminal (authentication terminal) 20b generates authentication information by combining the information of the authentication image stored in the image data storage unit 12b and the authentication identifier of the second communication terminal (authentication terminal) 20b stored in the authentication information storage unit 302a, and in step S207, the authentication information is then transmitted to the information-processing server 3007.
(d) In step S207, upon reception of the authentication information from the second communication terminal (authentication terminal) 20b, the information-processing server 30 uses the authentication information acquiring means (module) 112 to store the received authentication information in the authentication information storage unit 102, and then uses the authentication information verifying means (module) 113 to carry out verification of the authentication information by accessing the authentication parameter storage unit 101, the authentication information storage unit 102, and the authentication information storage unit 302b in step S208.
(e) Once the authentication results of the authentication information are obtained, the information-processing server 30 transmits the authentication results to the first communication terminal 20a, which then receives the authentication results using the first communication terminal 20a.

According to the information-processing server 30 of the seventh embodiment of the present invention, use of authentication information of the second communication terminal (authentication terminal) 20b allows authentication of the first communication terminal 20a not including authentication information. Accordingly, if the user has one second communication terminal (authentication terminal) 20b, a plurality of terminals may be authenticated in the same manner.

Furthermore, according to the seventh embodiment of the present invention, information that conventionally needs to be input using a mobile phone may be input using a computer equipped with a user interface, and that input information may be further transmitted to a server at a high security level.

### (EIGHTH EMBODIMENT)

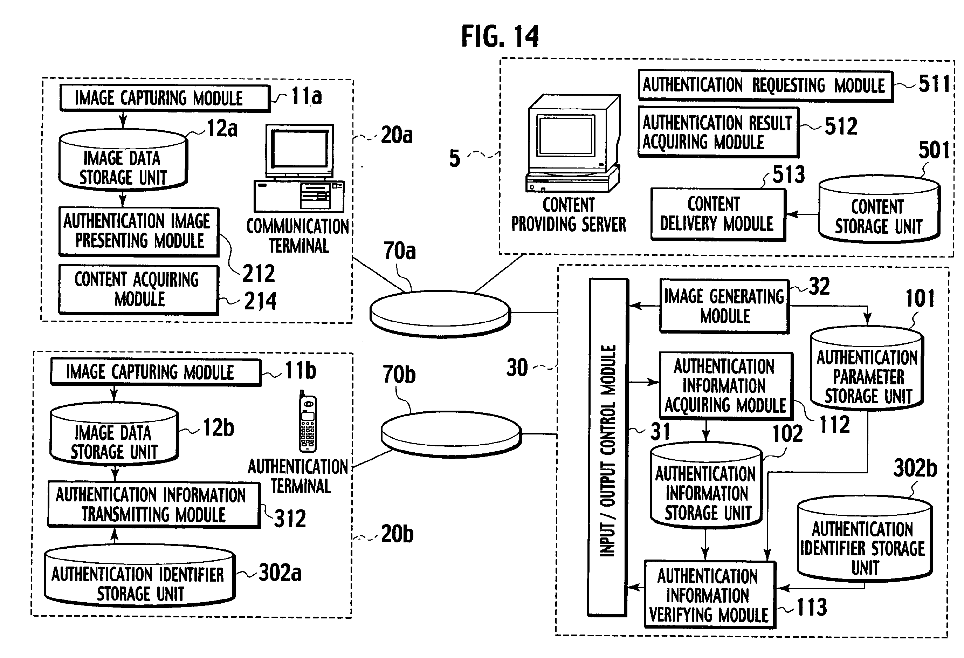

An information processing system according to an eighth embodiment of the present invention shown in FIG. 14 is different from information processing system according to the seventh embodiment of the present invention shown in FIG. 12 in that it includes a content providing server 5. Furthermore, the first communication terminal 20a includes a content acquiring means (module) 214 instead of the authentication result acquiring means (module) 213.

An information-processing server 30 according to the eighth embodiment of the present invention uses an image generating means (module) 32 to receive an authentication request of the first communication terminal 20a from the content providing server 5, and then uses the authentication information verifying means (module) 113 to transmit the results to the content providing server 5.

The content providing server 5 according to the eighth embodiment of the present invention authenticates the first communication terminal 20a using the information of the information-processing server 30 and the second communication terminal (authentication terminal) 20b, and delivers contents to the authenticated first communication terminal 20a, and includes a content storage unit 501, an authentication requesting means (module) 511, an authentication result acquiring means (module) 512, and a content delivery means (module) 513.

The content storage unit 501 is stored with the contents provided by the content providing server 5.

The authentication requesting means (module) 511 is a means for requesting the information-processing server 30 for authentication of the first communication terminal 20a in response to an acquisition request for contents from the first communication terminal 20a, for example.

The authentication result acquiring means (module) 512 is a means for acquiring from the information-processing server 30 the authentication results of the first communication terminal 20a requested by the authentication requesting means (module) 511.

The content delivery means (module) 513 is a means for transmitting the contents stored in the content storage unit 501 when the first communication terminal 20a is authenticated.

In FIG. 14, while the content providing server 5 according to the eighth embodiment of the present invention is connected to a first communication network 70a, it may be connected to any communication network as long as communication is possible with the information-processing server 30.

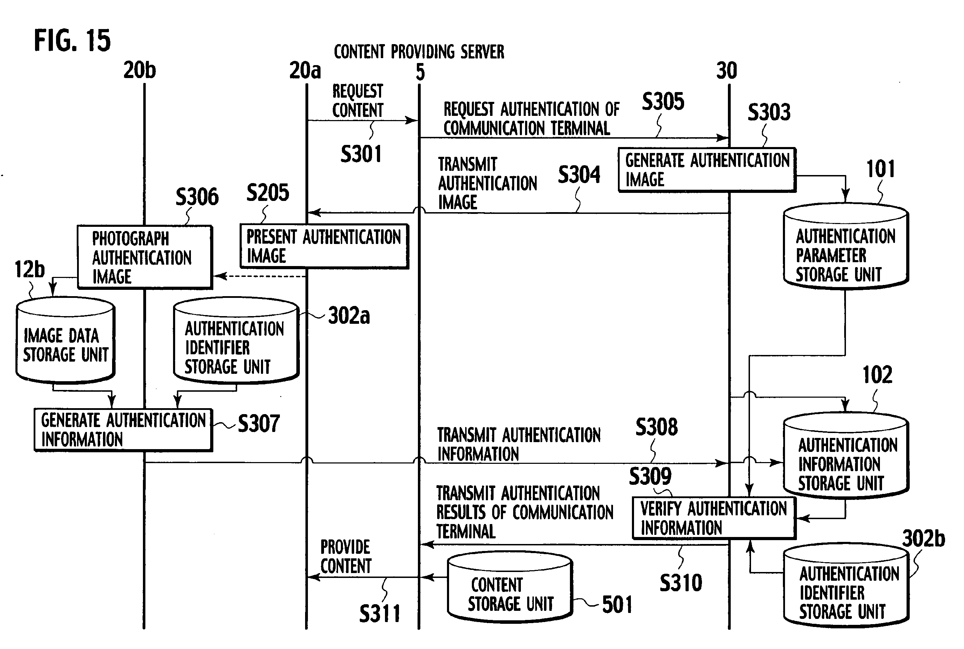

Next, an information processing method according to the eighth embodiment of the present invention is described with reference to FIG. 15.
(a) First, in step S302, in response to a request for contents to the content providing server 5 from the first communication terminal 20a, the content providing server 5 uses the authentication requesting means (module) 511 to request the information-processing server 30 to authenticate the first communication terminal 20a in step S302.
(b) Processing of steps S303 through S209 thereafter is the same as that of the steps S202 through S208 in FIG. 13 and description thereof is thus omitted.
(c) When authentication results are obtained by the information-processing server 30 in step S309, the information-processing server 30 transmits the authentication results of the first communication terminal 20a to the content providing server 5 in step S310.
(d) Upon authorization of authentication, the content providing server 5 provides the contents to the first communication terminal 20a from the content storage unit 501 in step S311.

This method is effective in the case of the first communication terminal 20a acquiring contents from the content providing server 5 using a general browser.

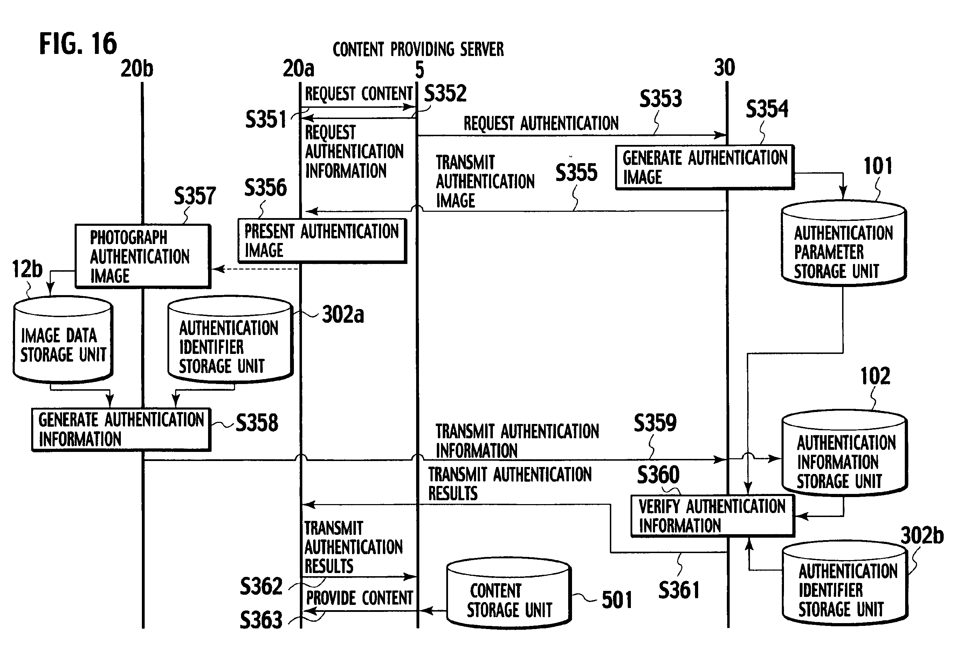

Next, an information processing method according to a modification of the seventh embodiment of the present invention is described with reference to FIG. 16.
(a) First, in step S351, when the first communication terminal 20a requests the content providing server 5 for contents, the content providing server 5 requests the first communication terminal 20a for authentication information in step S352.
(b) Upon reception of this request, the first communication terminal 20a sends an authentication request to the information-processing server 30.
(c) Processing of steps S354 through S260 thereafter is the same as that of the steps S202 through S208 in FIG. 13 and description thereof is thus omitted.
(d) When authentication results are obtained by the information-processing server 30 in step S360, the information-processing server 30 transmits the authentication results of the first communication terminal 20a to the first communication terminal 20a in step S361, where upon reception thereof, the first communication terminal 20a then transmits the authentication results to the content providing server 5.
(e) Upon reception of the authentication results, when authentication is authorized, the content providing server 5 provides the contents to the first communication terminal 20a from the content storage unit 501 in step S363.

This method is effective in the case of the first communication terminal 20a providing contents to the content providing server 5 using an application including an authentication request program provided by the content providing server 5 or the information-processing server 30.

According to the eighth embodiment of the present invention, the information-processing server 30 may have authentication functions for a plurality of servers, and may control various servers to conduct authentication at a high security level.

### (NINTH EMBODIMENT)

While authentication of the first communication terminal 20a has been mainly described with the first through the eighth embodiment of the present invention, a ninth embodiment of the present invention describes authentication of a user operating the first communication terminal 20a and the second communication terminal (authentication terminal) 20b.

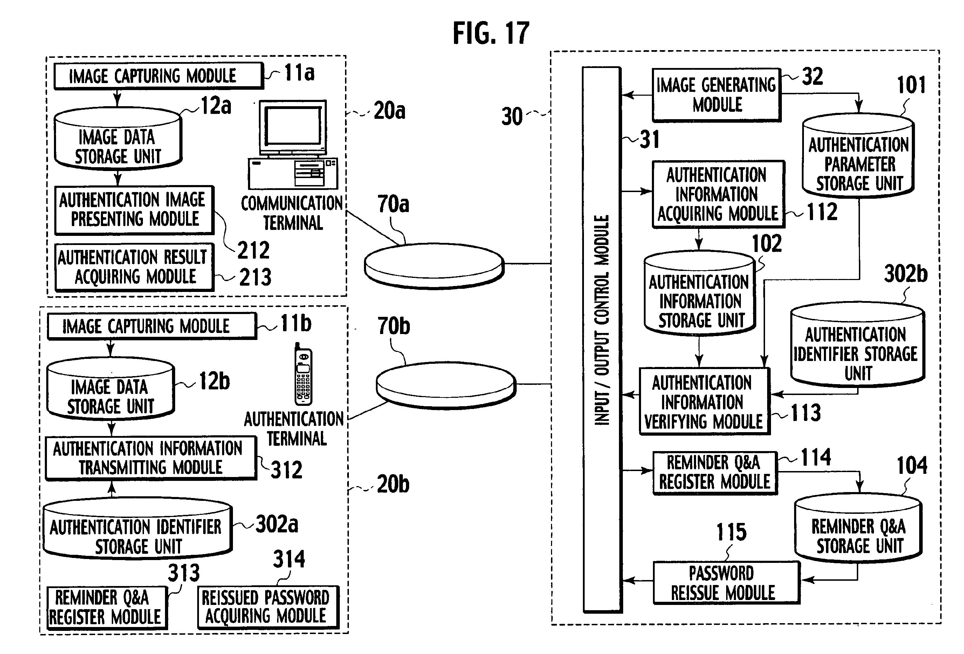

An information-processing server 30 according to the ninth embodiment of the present invention shown in FIG. 17 is different from that according to the seventh embodiment of the present invention shown in FIG. 12 in that it includes a reminder-question-and-answer storage unit 104, a reminder-question-and-answer register means (module) 114, and a password reissue means (module) 115. The second communication terminal (authentication terminal) 20b according to the ninth embodiment differs from that according to the seventh embodiment in that it includes a reminder-question-and-answer register means (module) 313 and a reissued password acquiring means (module) 314.

The reminder-question-and-answer register means (module) 114 is a means for prompting the user to select a plurality of questions answerable by the user from a plurality of questions and answers provided by the reminder-question-and-answer register means (module) 313 of the second communication terminal (authentication terminal) 20b, associating them to an authentication identifier of the user, and storing the questions and answers selected by the user and chosen answers in the reminder-question-and-answer storage unit 104.

The password reissue means (module) 115 is a means for, in response to a password reissue request given by the reissued password acquiring means (module) 314 of the second communication terminal (authentication terminal) 20b in the case where the user has forgotten his/her password, accessing the reminder-question-and-answer storage unit 104 and then prompting the user to answer the questions selected by the user, and determining whether answers thereof match the answers stored in the reminder-question-and-answer storage unit 104, and reissuing a password to the user when all of the questions have been answered.

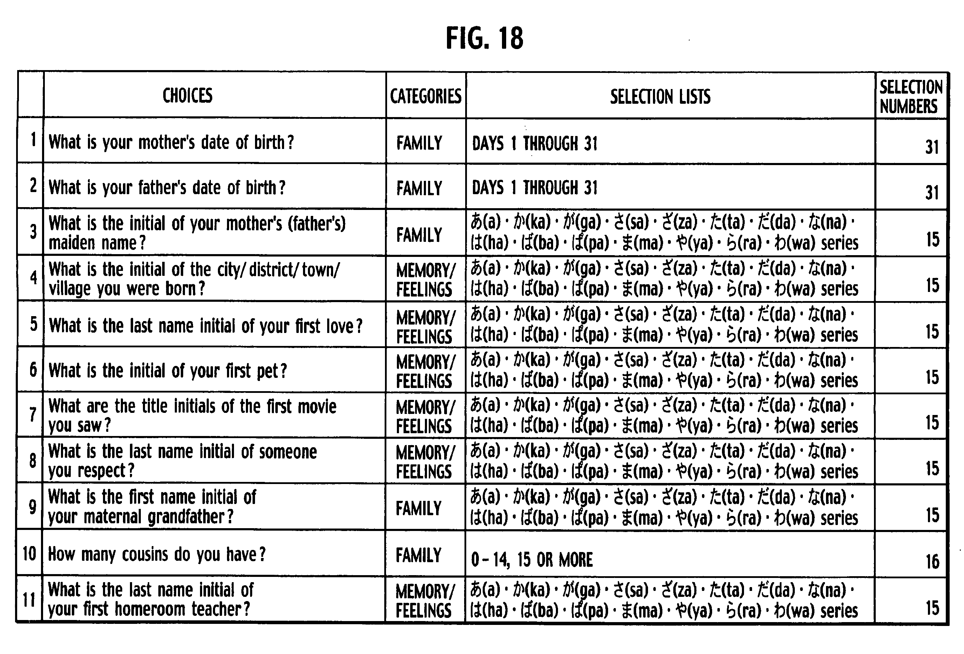

As shown in FIG. 18, the questions and answers presented by the information-processing server 30 according to the ninth embodiment of the present invention include columns for question choices and answer selection lists. It may further include columns for question categories and number of items in the selection lists. The user selects from these possible questions at least a predetermined number (e.g., four) of questions that he/ she can absolutely answer.

In the case where the user selects four or more questions at the time of registration in this manner, the number of combinations for selecting four questions or more from eleven questions is 1817.

For example, when a question "What is your mother's date of birth?" is selected by the user, days 1 through 31 are given in a selection list and the user selects the correct answer therefrom. This is repeated a predetermined number of times, and the second communication terminal (authentication terminal) 20b transmits the results to the information-processing server 30. For example, when the user selects four questions with fifteen selections each, there are 15⁴ or 50625 combinations of answers. Use of such method makes it impossible to decipher questions and corresponding answers selected by the user, resulting in provision of a higher level of security.

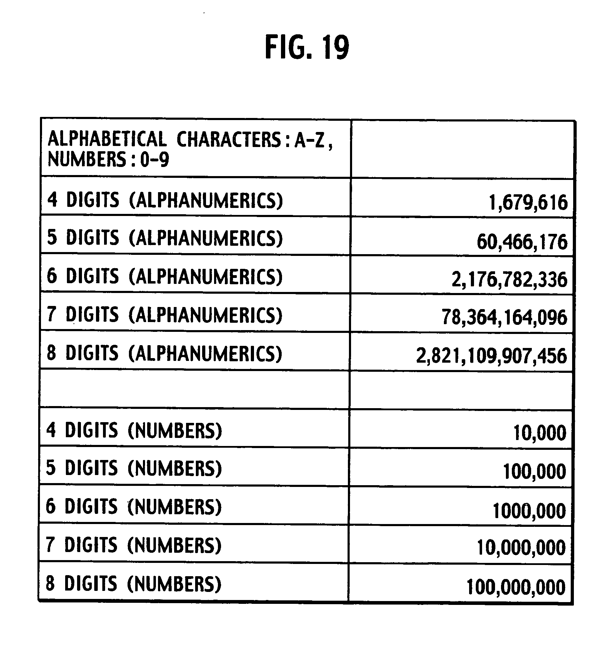

For example, as shown in FIG. 19, according to alphanumeric passwords, combining alphanumerics (alphabetical characters A to Z and ten numbers from zero to nine) gives 36 characters to the fourth power or 1,679,616 combinations.

Meanwhile, according to the method described with the ninth embodiment of the present invention, when four questions are selected from the eleven questions shown in FIG. 18 and there are 50,625 combinations of selection lists for those four questions, the number of possible combinations available to the user is at least 91,985,625. This means that there is a strength of five and six digits for alphanumeric character passwords and strength of seven and eight digits for numerical passwords, as can be understood by referencing FIG. 19.

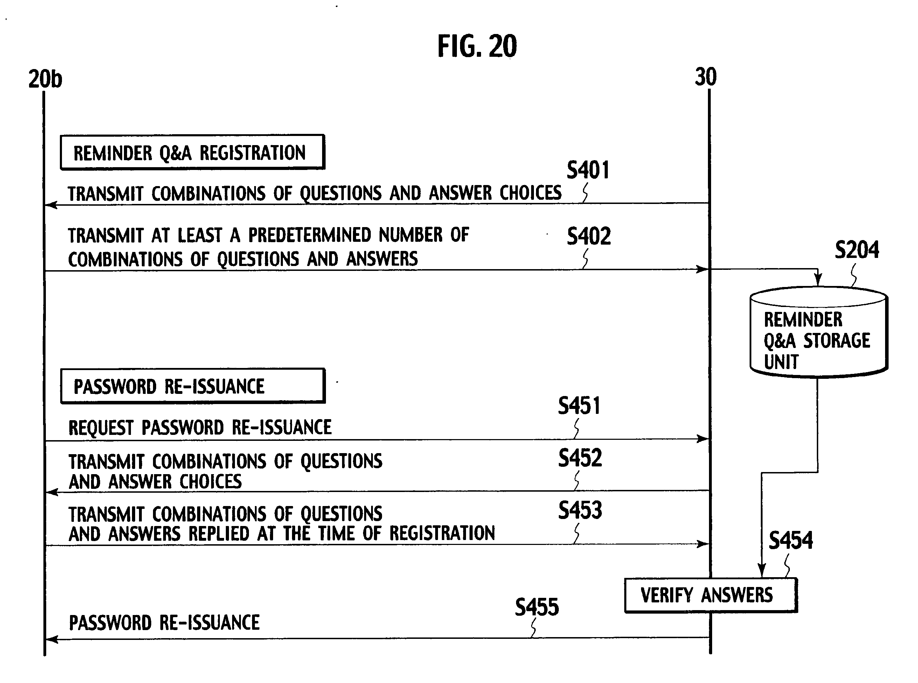

Next, an information processing method according to the ninth embodiment of the present invention is described with reference to FIG. 20.
(a) First, when registering reminder questions and answers, the information-processing server 30 transmits combinations of questions and answer choices to the second communication terminal (authentication terminal) 20b, and determines questions absolutely answerable by the user and corresponding answers in step S401. Next, in step S402, the information-processing server 30 receives at least the predetermined number of questions and answers from the second communication terminal (authentication terminal) 20b and stores them in the reminder-question-and-answer storage unit 104.
(b) In the case of reissuing a password, when the information-processing server 30 receives a reissue request for a password from the second communication terminal (authentication terminal) 20b in step S451, the information-processing server 30 transmits to the second communication terminal (authentication terminal) 20b in step S452 the same information as the combinations of questions and answer choices transmitted in step S401 and then prompts the user to answer the same questions as replied in step S402.
(c) Upon reception of the combinations of questions and answers replied during registration from the second communication terminal (authentication terminal) 20b in step S453, it accesses the reminder-question-and-answer storage unit 104 and verifies the reply in step S454, and reissues a password when the verification result reveals that the selected questions and the answers to those questions all match in step S453.

The information processing system according to the ninth embodiment of the present invention allows authentication of the user at an extremely high security level.

### (TENTH EMBODIMENT)

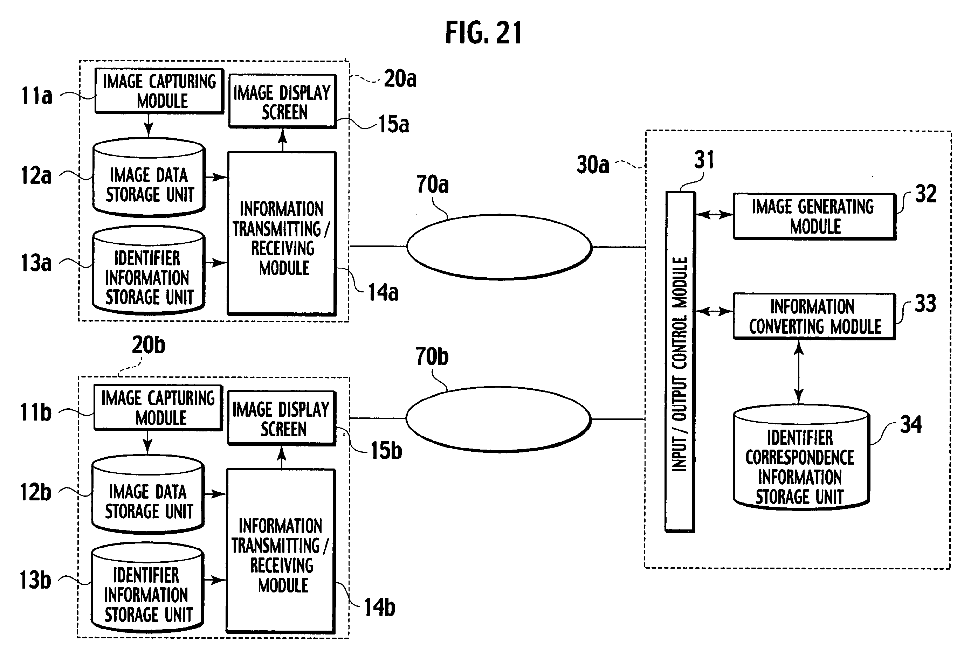

An information-processing server 30a according to a tenth embodiment of the present invention, as shown in FIG. 21, includes an identifier correspondence information storage unit 34 stored with correspondence information retrieved using a communication terminal identifier, and an information converting means (module) 33 for converting information from a communication terminal in accordance with the correspondence information. It further includes an image generating means (module) 32 for generating an image from the information from the communication terminal, and an input/ output control means (module) 31 for controlling communication of information with the communication terminal.

The identifier correspondence information storage unit 34 is stored with correspondence information that specifies how to convert information before transmitting it in accordance with the identifier, which is for identifying model or the like of the communication terminal.

The information converting means (module) 33 reads out the correspondence information from the identifier correspondence information storage unit 34 and converts the information transmitted to the communication terminal. The image generating means (module) 32 transmits information converted to an image to a communication terminal when the communication terminal does not have image generating capability.

With the information processing system according to the tenth embodiment of the present invention, the information-processing server 30a is connected to a first communication terminal 20a via a first communication network 70a, and is connected to a second communication terminal 20b via a second communication network 70b, for example, as shown in FIG. 21. Alternatively, a plurality of communication terminals may be connected thereto via a plurality of communication networks.

The first communication terminal 20a and the second communication terminal 20b include image capturing means (modules) 11a and 21, respectively, such as cameras or scanners for reading an image of information two-dimensionally encoded and written on paper or the like. They further include image data storage units 12a and 22, respectively, stored with the read image information. They respectively even further include an identifier information storage unit configured to store identifier information for identifying the model of a communication terminal or the like. They respectively yet even further include an information transmitting/ receiving means (module) for communication with the information-processing server 30a, and an image display screen for displaying information such as a received image.

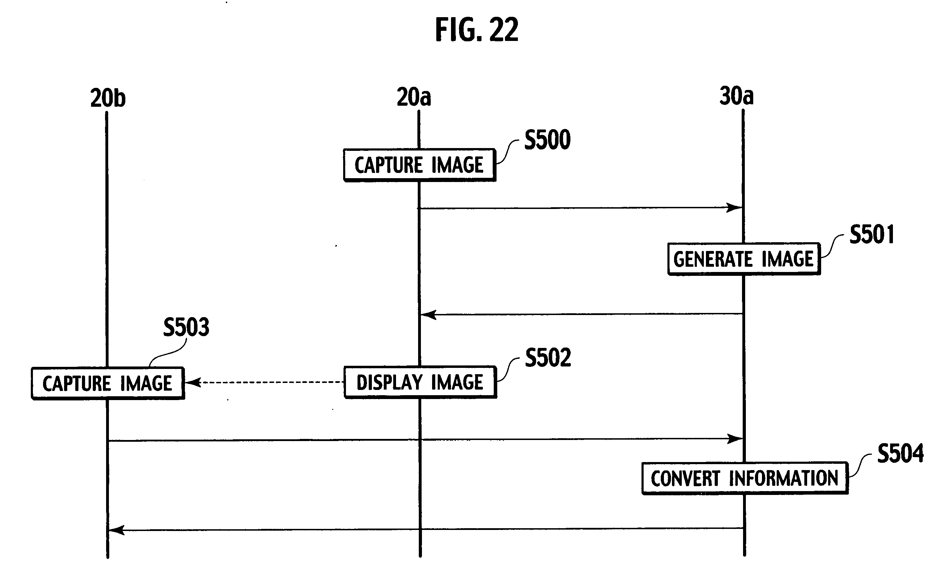

A procedure for communication is described forthwith while referencing FIG. 22.
(a) In step S500, the first communication terminal 20a uses the image capturing means (module) 11a to capture a two-dimensionally encoded image and then transmits it along with information of the first communication terminal 20a itself to the information-processing server 30a.
(b) In step S501, the information-processing server 30a returns information of the two-dimensionally encoded image to the first communication terminal 20a based on the information received therefrom. In step S502, the first communication terminal 20a displays the image received from the information-processing server 30a on an image display screen 15a.
(c) Afterwards, in step S503, the second communication terminal 20b uses the image capturing means (module) 11b to capture the image displayed on the image display screen 15a of the first communication terminal 20a and then transmits it along with identifier information stored in an identifier information storage unit 13b to the information-processing server 30a.
(d) In step S504, the information-processing server 30a searches the identifier correspondence information storage unit 34 for corresponding information for converting the image and related information based on the identifier received from the second communication terminal 20b and read it out. Said image and related information are converted in conformity with that corresponding information and then returned to the second communication terminal 20b.

Since differences in two-dimensionally encoded description method between dissimilar models may be absorbed through the information conversion of step S504 in this procedure, the necessary information may be properly transmitted via the two-dimensionally encoded image even if the first communication terminal 20a and the second communication terminal 20b are dissimilar models.

### <First Detailed Example of Tenth Embodiment: Telephone Number Exchange>

(a) In step S500, an image generated by two-dimensionally encoding phone book registration command information is read, and a telephone number or an e-mail address is transmitted to the information-processing server 30a as information of the first communication terminal 20a itself.
(b) In step S501, an image generated by combining the phone book registration command information and the telephone number and the e-mail address of the first communication terminal 20a and then two-dimensionally encoding the resulting combined information is returned to the first communication terminal 20a.
(c) In steps S502 and S503, the image displayed on the image display screen 15a of the first communication terminal 20a is captured by the second communication terminal 20b and then transmitted along with the identifier of the second communication terminal 20b to the information-processing server 30a.
(d) In step S504, the image received by the information-processing server 30a is converted to information interpretable by the second communication terminal 20b. The second communication terminal 20b which has received that information registers the telephone number and the e-mail address of the first communication terminal 20a in a phone book.

With the same procedure, registering a telephone number or an e-mail address of the second communication terminal 20b in a phone book of the first communication terminal 20a allows equivalent processing of exchanging business cards to be carried out by capturing a two-dimensionally encoded image. Furthermore, in the case where the second communication terminal 20b includes an image generating function, an image may be generated by the second communication terminal 20b, directly read in by the first communication terminal 20a, and then transferred as long as model information of the first communication terminal 20a is obtained.

### <Second Detailed Example of Tenth Embodiment: Multiple Types of Terminal Information>

(a) In step S500, an image generated by two-dimensionally encoding compatibility fortune telling command information is read, and a date of birth or name is transmitted to the information-processing server 30a as information of the first communication terminal 20a itself.
(b) In step S501, an image resulting from two-dimensionally encoding information that includes the compatibility fortune telling command information and the date of birth or name of the first communication terminal 20a or in-progress fortune telling results are returned to the first communication terminal 20a.
(c) In steps S502 and S503, the image displayed on the image display screen 15a of the first communication terminal 20a is captured by the second communication terminal 20b and then transmitted along with the identifier and the date of birth or name as information of the second communication terminal 20b itself to the information-processing server 30a.
(d) With information conversion in step S504, results of executing a compatibility fortune telling program is returned to the second communication terminal 20b based on the information therefrom. Furthermore, the results are also returned to the first communication terminal 20a.

### (ELEVENTH EMBODIMENT)

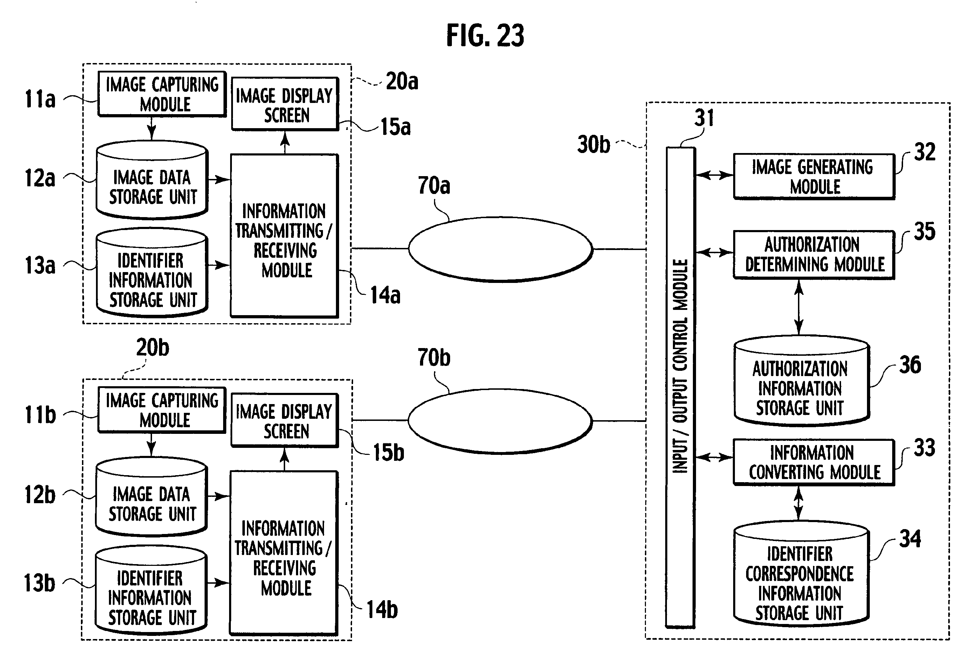

An information-processing server 30b according to an eleventh embodiment of the present invention further includes, in addition to the information-processing server 30a according to the tenth embodiment, an authorization information storage unit 36 stored with authorization information indicating whether a communication terminal authorizes information communication and an authorization judging means (module) 35 for judging the authorization information, as shown in FIG. 23.

The authorization information storage unit 36 is stored with information defining communication authorization/ non-authorization, which can be read out by searching identification information such as telephone numbers or terminal numbers of respective terminals. The authorization judging means (module) 35 reads the authorization information, judges whether communication is possible, and continues processing if YES while carries out error processing if NO.

An information processing system according to the eleventh embodiment of the present invention is the same as that according to the tenth embodiment.

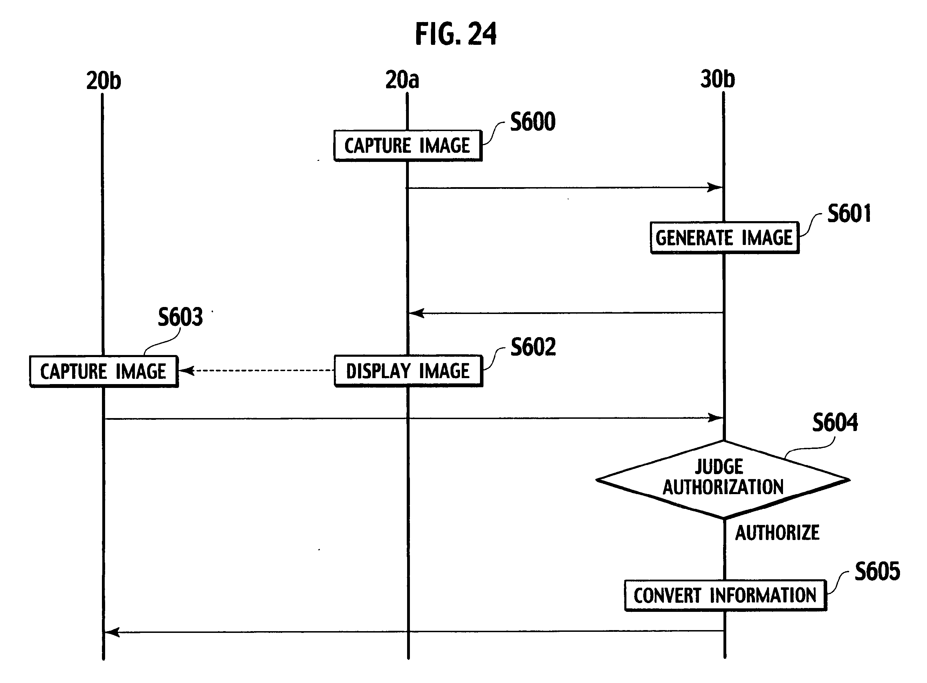

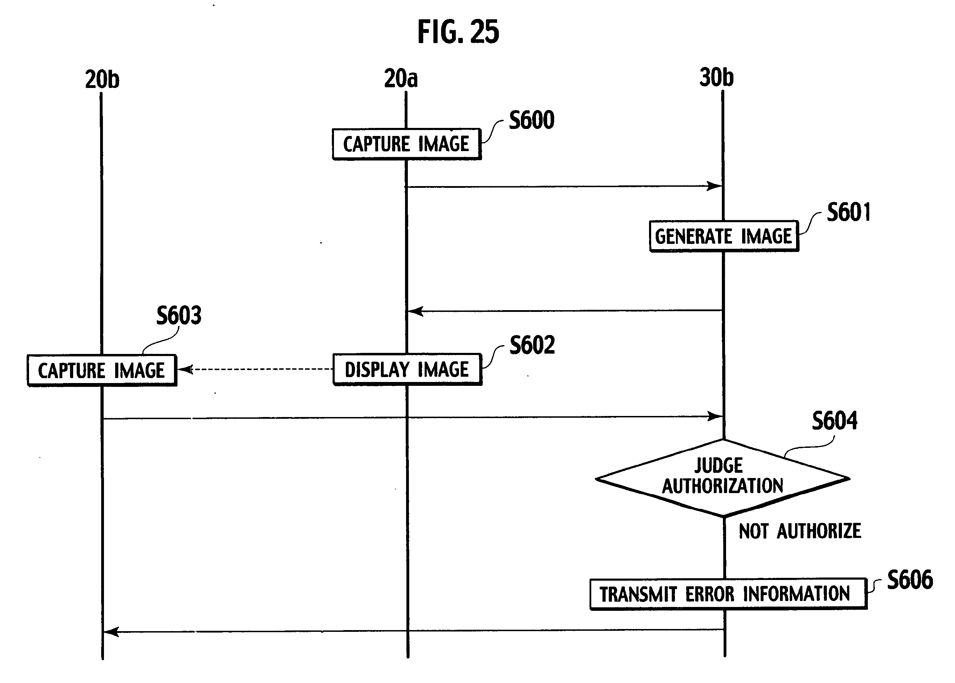

A procedure for communication is described forthwith while referencing FIGS. 24 and 25.
(a) Steps S600 through S603 are the same as steps S500 through S503 of FIG. 22.
(b) In step S604, the information-processing server 30b reads out the authorization information from the authorization information storage unit 36 based on the identification information of the second communication terminal 20b. That authorization information is judged by the authorization judging means (module) 35.
(c) When communication of information is authorized in step S605, the information-processing server 30 searches the identifier correspondence information storage unit 34 and reads out correspondence information used for converting the information, as in step S504 of FIG. 22. The information is converted in accordance with that correspondence information and then returned to the second communication terminal 20b.
(d) When communication of information is not authorized in step S606, error information is returned to the second communication terminal 20b.

According to this procedure, terminals that can share information and those that cannot may be divided into groups, increasing security for the information. In addition, the authorization information may be stored in the authorization information storage unit 36 using information such as an access time as a key. This allows regulation based on time slots and the like.

### (TWELFTH EMBODIMENT)

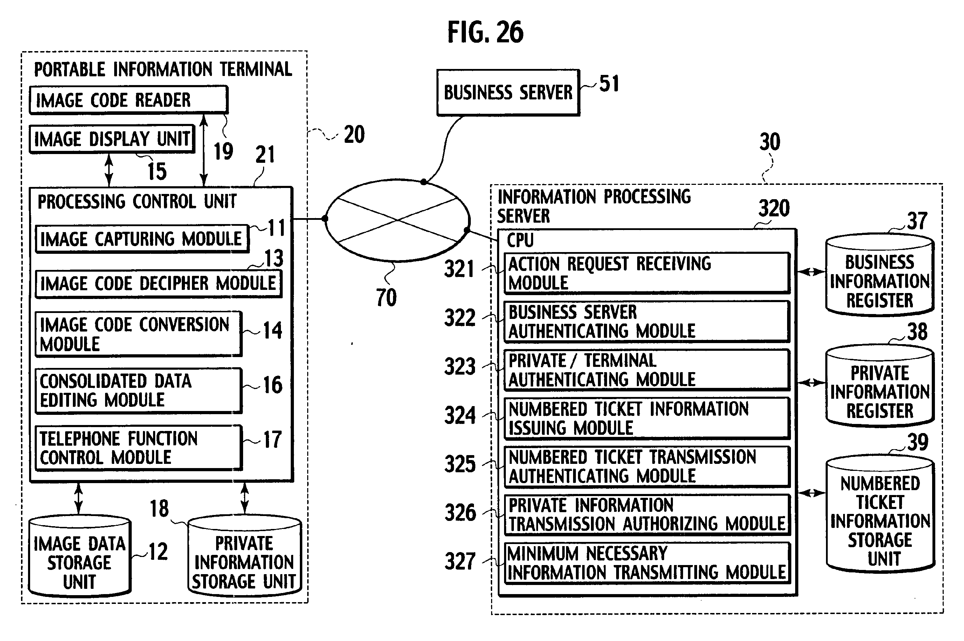

FIG. 26 is a block diagram of an information processing system according to a twelfth embodiment of the present invention focusing on a portable information terminal (first terminal) 20 connected to the Internet (communication network) 70, a business server (second terminal) 51, and an information-processing server 30. In this case, the "portable information terminal (first terminal) 20" is a portable information terminal including an image code reader 19 of any type such as a camera, various scanners like an infrared scanner as described with the first through the eleventh embodiment. "Image codes", also as with the first through the eleventh embodiment, include one-dimensional codes, two-dimensional codes, hologram codes, watermarks (acuagraphy), steganography (embedding information in an image), various other automatic identification codes, and the like. More specifically, an exemplary "image code" may be constituted by an information code, which is a matrix-type two-dimensional code called a QR code, and an identifiable information code arranged surrounding the information code. The length of a side of the information code may be approximately 8 to 15 mm (10 to 18 mm including the outer margin), for example. Aside from the QR code, a two-dimensional code such as Code 16, Code 49, MaxiCode, Data Matrix, Code One and the like which are international standards, and Scantalk code are available as the information code. The identifier code has a blank portion surrounding the information code and the length of the portion may be four times the length of a cell side. Here, a "cell" indicates the smallest information code rendering unit.

In actuality, a plurality of business servers (second terminals) 51 and a plurality of portable information terminals (first terminals) 20 may be connected to the Internet (communication network) 70; however, for ease of explanation, a single business server (second terminal) 51 and a single portable terminal (first terminal) 20 are shown in the drawing. The information processing system according to the twelfth embodiment of the present invention is a system in which authentication is conducted via the information-processing server 30 for other authentications provided between a portable terminal (first terminal) 20 and a business server (second terminal) 51 when authenticating the portable terminal (first terminal) 20 and the business server (second terminal) 51 intending to communicate information. In actuality, the portable terminal (first terminal) 20 may be connected to a digital communication network (another communication network), and this digital communication network may be connected to the Internet (communication network) 70 via a gateway apparatus. A system configuration where a plurality of mobile communications subscriber switching units are connected to the digital communication network and where a plurality of radio relay units are connected to the mobile communications subscriber switching units is available. In other words, it should be understood that a system with which information transmitted from the portable information terminal (first terminal) 20 is transmitted to a mobile communications subscriber switching unit and which the information is transmitted from the mobile communications subscriber switching unit to the gateway apparatus via the digital communication network and which the gateway apparatus mediates data between the communication network 70 and the digital communication network may be included in FIG. 26.

The information-processing server 30 shown in FIG. 26 includes a CPU 320 having an action request receiving means (module) 321, a business server authenticating means (module) 322, a private/ terminal authenticating means (module) 323, a numbered ticket information issuing means (module) 324, a numbered ticket information authenticating means (module) 325, a private information transmission authorizing means (module) 326, and a minimum necessary information transmitting means (module) 327. A business information register 37, a private information register 38, and a numbered ticket information storage unit 39 are connected to this CPU 320.

The action request receiving means (module) 321 is a means for receiving an action request from the portable information terminal (first terminal) 20. The business server authenticating means (module) 322 is a logic circuit configured to authenticate the business server (second terminal) 51. The private/ terminal authenticating means (module) 323 is a logic circuit configured to authenticate the portable information terminal (first terminal) 20. The numbered ticket information issuing means (module) 324 is a logic circuit configured to issue authentication information (numbered ticket information) to the portable information terminal (first terminal) 20 that has issued the action request. The numbered ticket information authenticating means (module) 325 is a logic circuit configured to determine whether or not the authentication information (numbered ticket information) is accurate. Furthermore, the private information transmission authorizing means (module) 326 is a logic circuit configured to authorize transmission of private information. The minimum necessary information transmitting means (module) 327 is a logic circuit configured to transmit only the minimum necessary information for the requested action to the business server (second terminal) 51 based on the authentication information (numbered ticket information). The business information register 37 is a storage unit configured to store business information. The private information register 38 is a storage unit configured to store private information to be authenticated. The numbered ticket information storage unit 39 is a storage unit configured to store authentication information (numbered ticket information) to be issued.

Meanwhile, the portable information terminal (first terminal) 20 includes a processing control unit 21, an image display unit 15, an image data storage unit 12, a private information storage unit 18 and the like in addition to the above-mentioned image code reader 19. The processing control unit 21 has an image capturing means (module) 11, an image code decipher means (module) 13, an image code conversion means (module) 14, a consolidated data editing means (module) 16, and a telephone function control means (module) 17. The image code reader 19, the image display unit 15, image data storage unit 12, and the private information storage unit 18 are connected to this processing control unit 21.

The image code decipher means (module) 13 of the processing control unit 21 acquires data read by the image code reader 19, and checks whether an image code such as a two-dimensional code is valid. The image code conversion means (module) 14 converts the image code read by the image code decipher means (module) 13 to character data. By the image code decipher means (module) 13 and the image code conversion means (module) 14, the image code may be converted from simple image data to computer readable data. The consolidated data editing means (module) 16 is a means (module) for editing and consolidating private information stored in the private information storage unit 18 and merchandise information obtained by the image code conversion means (module) 14, and transmitting the results to the outside. The image code reader 19 reads the image code embedded with information regarding merchandise such as a merchandise description page of an advertising medium or merchandise information, and imports it in the portable information terminal (first terminal) 20 according to the twelfth embodiment of the present invention.

The private information storage unit 18 is stored with user private information divided into "first level private information" and "second level private information". "First level private information" is the minimum information such as a user's name or registration number necessary for authenticating the portable information terminal (first terminal) 20, and is low security level private information. "Second level private information" is important private information with a higher security level than the first level private information, and may include, for example, address, e-mail address, credit card number, bank account name, salary, property, family structure information, physical descriptions, and the like. A temporary storage unit is a storage unit temporarily stored with codes read from the image code reader 19, and codes obtained by the image code decipher means (module) 13 and the image code conversion means (module) 14. Although not displayed in FIG. 26, an input unit, a radio, an audio processing unit, a coder/ encoder (CODEC), a data storage unit, the temporary storage unit, and a power supply circuit or battery for these respective units are naturally included to function normally.

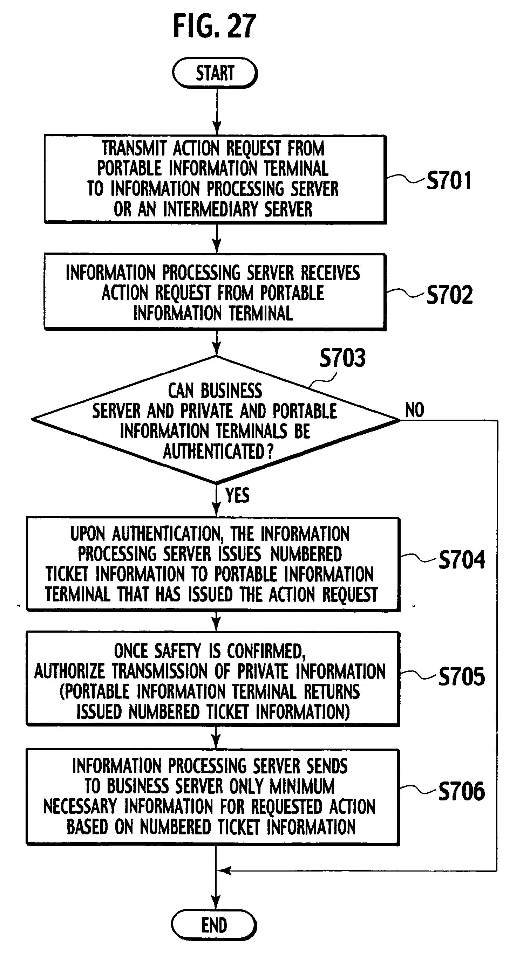

Next, an information processing method according to the twelfth embodiment of the present invention is described using a flowchart of FIG. 27.
(a) First, in step S701, the portable information terminal (first terminal) 20 reads an image code printed on a paper medium or the like, and transmits consolidated information generated by editing and consolidating the first level private information stored in the private information storage unit 18 and the merchandise information included in the image code to the information-processing server 30, which mediates an action request. In step S702, the information-processing server 30 then receives the action request from the portable information terminal (first terminal) 20.
(b) Afterwards, in step S703, the information server 30 accesses contents registered in the business information register 37 and the private information register 38 and then authenticates the business server (second terminal) 51 and the portable information terminal (first terminal) 20.
(c) Upon authentication of the business server (second terminal) 51 and the portable information terminal (first terminal) 20 in step S703, the information-processing server 30 issues the authentication information (numbered ticket information) in step S704 to the portable information terminal (first terminal) 20 that has issued the action request. Furthermore, the issued authentication information (numbered ticket information) is stored in the numbered ticket information storage unit 39.
(d) In other words, if safety is confirmed, transmission of the second level private information from the portable information terminal (first terminal) 20 is authorized. Then, in step S705, the portable information terminal (first terminal) 20 transmits this second level private information and the authentication information (numbered ticket information) to the information-processing server 30. The second level private information may be that stored in the private information storage unit 18, or minimum necessary information entered using the input unit of the portable information terminal (first terminal) 20.
(e) Next, the information-processing server 30 receives the second level private information and the authentication information (numbered ticket information). In step S706, only the minimum necessary information (second level private information) for the requested action is then transmitted to the business server (second terminal) 51 based on the received authentication information (numbered ticket information).

According to the information processing method of the twelfth embodiment shown in FIG. 27, authentication between the portable information terminal (first terminal) 20 and the business server (second terminal) 51 is possible without transmission of unnecessary data or obtaining each other's unnecessary information.

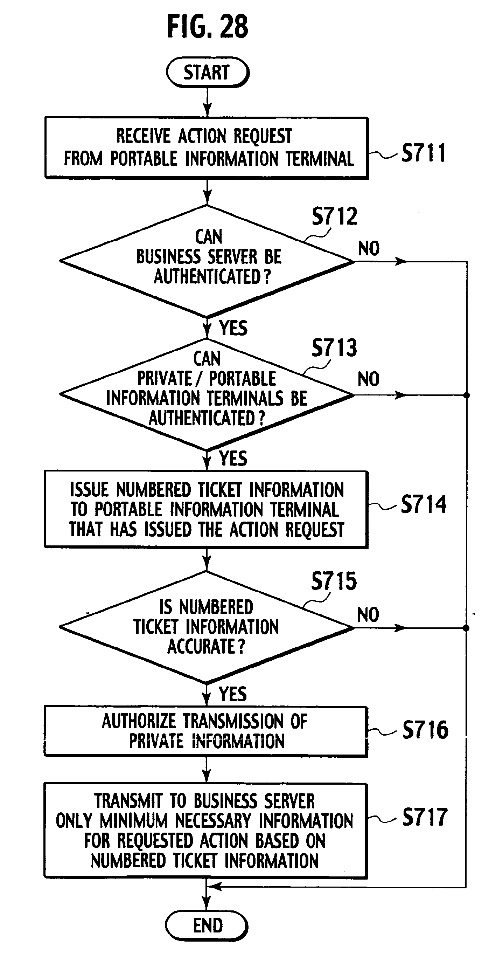

FIG. 28 shows a flowchart describing operations of the information-processing server 30 used to implement the information processing method according to the twelfth embodiment.
(a) First, in step S711, the action request receiving means (module) 321 of the information-processing server 30 receives an action request and the first level private information from the portable information terminal (first terminal) 20. In step S712, the business server authenticating means (module) 322 then authenticates the business server (second terminal) 51. Furthermore, in step S713, the private/ terminal authenticating means (module) 323 authenticates the portable information terminal (first terminal) 20.
(b) Once authentication of the business server (second terminal) 51 and the portable information terminal (first terminal) 20 is completed in step S712, numbered ticket information issuing means (module) 324 of the information-processing server 30 issues the authentication information (numbered ticket information) in step S714 to the portable information terminal (first terminal) 20 that has issued the action request.
(c) In step S715, the business server (second terminal) 325 of the portable information terminal (first terminal) 20 determines whether the authentication information (numbered ticket information) is accurate, and if YES, the private information transmission authorizing means (module) 326 authorizes transmission of the second level private information to the portable information terminal (first terminal) 20.
(d) The information-processing server 30 then receives the second level private information and the authentication information (numbered ticket information). In step S717, the minimum necessary information transmitting means (module) 327 of the information-processing server 30 then transmits only the minimum necessary information (second level private information) for the requested action from the portable information terminal (first terminal) 20 to the business server (second terminal) 51 based on the authentication information (numbered ticket information).

The information processing system according to the twelfth embodiment may adopt an "encrypted random number meta database system" for the portable information terminal 20. The "encrypted random number meta database system" is a method of holding a group of unique, infinitely long random numbers instead of the "first level private information" in the private information storage unit 18 of the portable information terminal 20, combining them with a dynamically issued session ID, and then converting this identification information to private information using the information-processing server 30.

When requesting the action in step S703 of the flowchart of FIG. 27 or in step S712 of the flowchart of the FIG. 28, unique information of the portable information terminal 20 or the first level private information for private authentication needs to be received from the portable information terminal 20 for private/ terminal authentication. Since the first level private information first transmitted from the portable information terminal 20 is random numbers due to use of the encrypted random number meta database system, a safe system preventing unnecessary information leaks to third parties is possible.

With the information processing system according to the twelfth embodiment shown in FIG. 26, the information-processing server 30 is divided for each processing, as with the meta server 76 in the private information protection method according to the first embodiment, and implemented by the plurality of servers 72, 73, and 74, and the data circulating over the communication network 70 is encrypted in a form only decryptable by the servers to process that data, thereby allowing the divided servers to decrypt only necessary data for processing (see FIG. 1).

In other words, the information-processing server 30 shown in FIG. 26 is constituted by the plurality of servers 72, 73, 74, ... corresponding to the meta server 76 shown in FIG. 1. In step S705 of the flowchart of FIG. 27, multiple pieces of information corresponding to the number of servers 72, 73, 74, ... are respectively encrypted by multiple encryption keys corresponding to the servers 72, 73, 74, ... one to one, and multiple pieces of encrypted information E1, E2, E3, ..., En corresponding to the number of servers 72, 73, 74, ... are then generated. The information-processing server (meta server) 30 receives the multiple pieces of encrypted information E1, E2, E3, ..., En and then successively decrypts them by the respective servers 72, 73, 74, ....

In other words, a first piece of information is encrypted using an encryption key for the first server 72 in the meta server to generate the first encrypted information E1, a second piece of information is encrypted using an encryption key for the second server 73 in the meta server to generate the second encrypted information E2, a third piece of information is encrypted using an encryption key for the third server 74 in the meta server to generate the third encrypted information E3, ..., and an n-th piece of information is encrypted using an encryption key for the n-th server in the meta server to generate the n-th encrypted information En, generating the second level private information.

The meta server (information-processing server) 30 then receives the first encrypted information E1, the second encrypted information E2, the third encrypted information E3, ..., and the n-th encrypted information E2 as the second level private information. Afterwards, the first encrypted information E1 is decrypted and processed by the first server 72 of the meta server (information-processing server) 30, the second encrypted information E2 is decrypted and processed by the second server 73, the third encrypted information E3 is decrypted and processed by the third server 74, and the n-th encrypted information is decrypted by the n-th server. In step S706 of the flowchart of FIG. 27 or step 717 of FIG. 28, the second level private information is transmitted to the business server (second terminal) 51.

Alternatively, with the private information protection method according to the first embodiment, as described with reference to FIGS. 1, 2, and 3, an encrypted database allowing retrieval of associated cryptic data from encrypted retrieval key information using the encrypted information as a retrieval key may be implemented.

With the information processing system according to the twelfth embodiment, by using the first embodiment and the private information protection method according to the first embodiment when transferring information, which is to be transmitted to the business server that carries out an action, to the information-processing server 30, the information-processing server 30 cannot see the contents of those pieces of information and moreover cannot know who tries to do what as long as the information-processing server 30 does not conspire with the other servers to obtain the keys. In other words, the system has a mechanism such that information cannot be leaked to even an internal server manager.

Furthermore, by employing the private information protection method according to the first embodiment on the information-processing server 30 side and employing the "encrypted random number meta database system" for the portable information terminal 20, an authentication proxy model which not only defends information against attacks from the outside but prevents unnecessary leakage of information to even internal persons may be established.

Moreover, by employing the various private information protection methods according to the second through the sixth embodiment on the information-processing server 30 side, an authentication proxy model which not only defends information against attacks from the outside and but prevents unnecessary leakage of information to even internal persons may be established.

### <First Modification of Twelfth Embodiment: Ticket System>

Let us consider an application of the twelfth embodiment for an event venue. First, as shown in the flowchart of FIG. 27, entertainment (day and time, seating, venue and the like) is selected from a magazine, a personal computer, a Web site or the like, and an image code thereof is then photographed and transmitted to the information-processing server 30. After steps S702 and S703, the information-processing server 30 issues numbered ticket information to the portable information terminal 20 in step S704. Ticket reservation and settlement are then carried out after steps S705 and S706. At the entrance of the event venue, an access controller reads a ticket authentication image code of the portable information terminal 20, confirms proof of payment by a server, displays a "predetermined image" (such as OK) if charges are paid, visually recognizes and then allows admission. However, admission may be congested if this "admission" operation at the event venue entrance takes time. In addition, if a user has the ticket authentication image code read in advance to avoid congestion and obtains the predetermined image, the user can transfer it to another user via a mobile phone. Therefore, this system cannot fulfill the task of authentication at the time of admission.

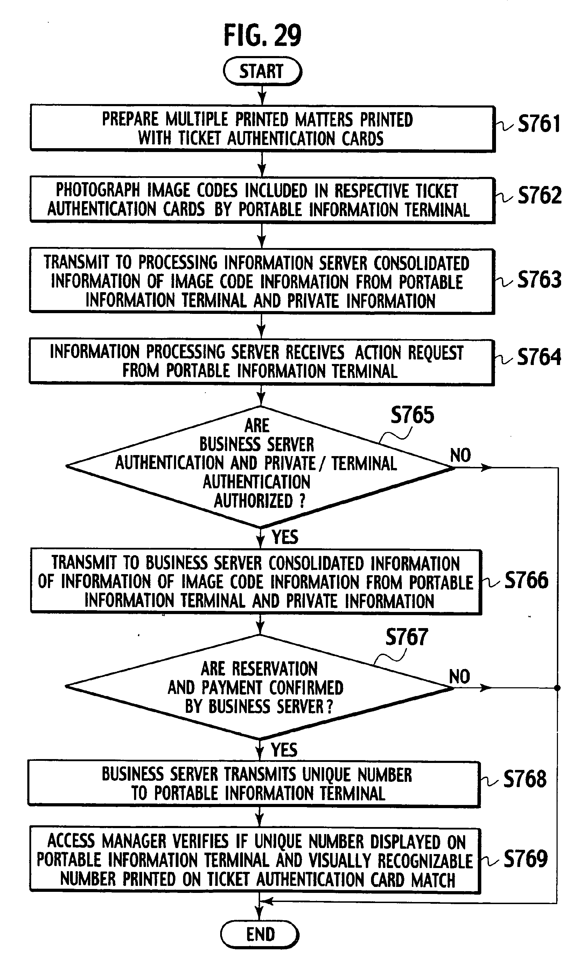

In order to resolve this problem, the ticket system according to this modification of the twelfth embodiment employs a method shown in a flowchart of FIG. 29.
(a) First, in step S761, a plurality of printed materials printed with ticket authentication cards are prepared. The "printed materials" may be suitable-sized cards, each printed with a unique number in a visually recognizable form below an image code. For example, the unique number such as 2A84RT4 is printed below the image code. This image code may be constituted by a matrix-type two-dimensional code called a QR code and an information code arranged surrounding the two-dimensional code. A card printed with an image code and a number as a set is hereafter called a "ticket authentication card". Note that the unique number printed below the image code is embedded in the authentication image code.
(b) In step S762, the image code included in the ticket authentication card is then photographed by the portable information terminal 20. Then, in step S763, consolidated information made up of information of the image code and the first level private information is transmitted to the information-processing server 30 from the portable information terminal 20.
(c) Therefore, in step S764, the information-processing server 30 receives an action request from the portable information terminal 20. Next, in step S765, the information-processing server 30 conducts authentication of the business server 51 as well as private and terminal authentication. In step S765, upon authentication of the business server 51 and the portable information terminal 20, the information-processing server 30 issues numbered ticket information to the portable information terminal 20.
(d) Upon reception of the numbered ticket information, the portable information terminal 20 transmits to the information-processing server 51 consolidated information made up of information of the image code included in the ticket authentication card and the second level private information in step S766. In step S767, the business server 51 confirms reservation and payment by the portable information terminal 20.
(e) In step S768, the business server 51 then transmits the unique number to the portable information terminal 20.
(f) At the event venue entrance, in step S769, the access controller confirms that the unique number displayed on the portable information terminal 20 and the visually recognizable number printed on the ticket authentication card match. This may be conducted in approximately the same amount of time as "clipping a ticket". In addition, any number of print-based ticket authentication cards may be issued. Furthermore, they may be reused after collection.

In this manner, according to the ticket system of this modification of the twelfth embodiment, issuance of electronic tickets is possible without a dedicated reader, and access management is possible in approximately the same amount of time as clipping tickets (only visual recognition).

### <Second Modification of Twelfth Embodiment: Account Locking Settlement>

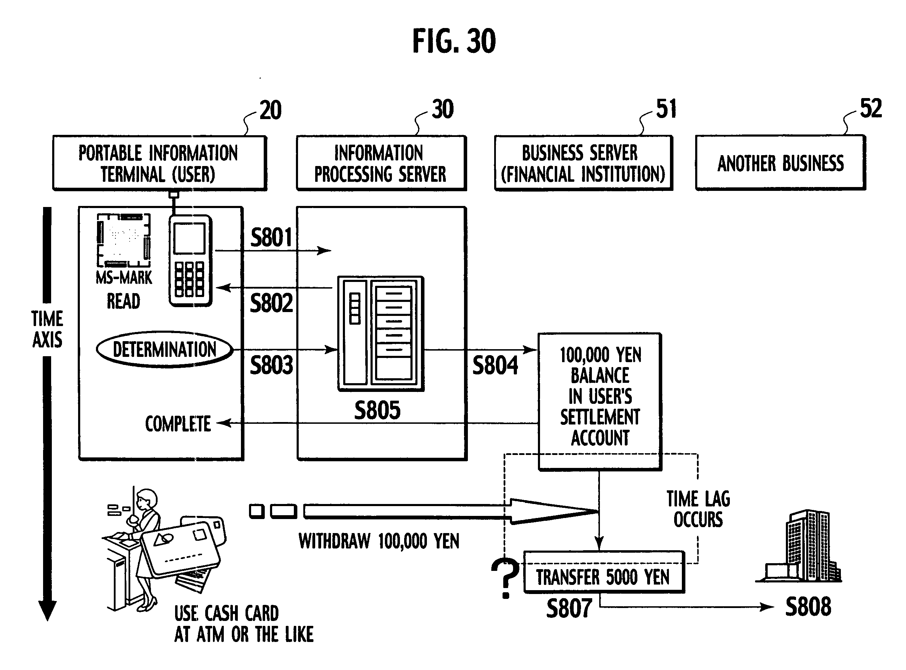

The information processing method according to the twelfth embodiment is characteristic of allowing establishment of an application system that carries out shopping through payment of charges or settlement by merely photographing an image code on a printed matter or a personal computer screen. Authentication of settlement by a financial institution is mostly implemented by a process shown in FIG. 30.
(a) In step S801, the portable information terminal 20 reads an image code and requests settlement to the information-processing server 30.
(b) Upon reception of a request for settlement from the portable information terminal 20, the information-processing server 30, in step S802, conducts authentication of the business server and private/ terminal authentication, and when finished, issues numbered ticket information to the portable information terminal 20.
(c) The portable information terminal 20 having received the numbered ticket information re-requests settlement to the information-processing server 30 in step S803.
(d) In step S804, the information-processing server 30 then requests settlement to the business server (financial institution) 51. The business server (financial institution) 51 confirms the balance of the account for the user of the portable information terminal 20, and in step S805, approves settlement to the portable information terminal 20.
(e) If settlement is approved, the user of the portable information terminal 20 withdraws a desired amount of money from the corresponding account. However, with the process shown in FIG. 30, a time lag between the operations of steps S804 and S805 occurs, and if step S805 comes after step S807, another business 52 withdraws the balance from the corresponding account first in step S807 during that time lag. At this point, withdrawal in step S805 may become impossible.

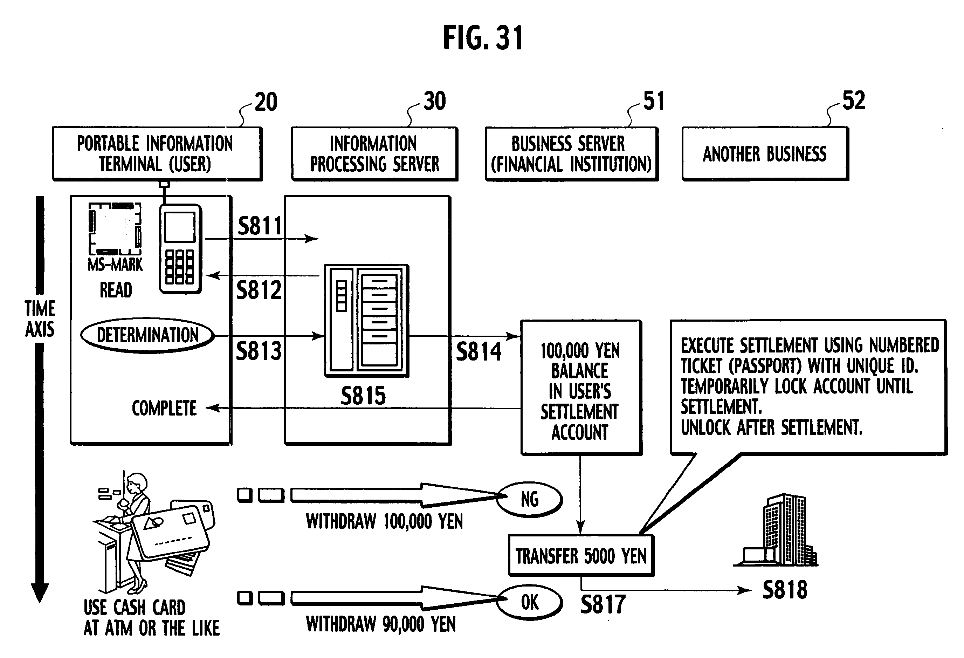

According to the second modification of the twelfth embodiment, in order to resolve this problem, an account locking ticket is issued in step S814 as shown in FIG. 31. In other words, it is a method where in step S814, the information-processing server 30 issues an account locking ticket to the business server (financial institution) 51 and locks that account until operation of the portable information terminal 20 corresponding to the account locking ticket is concluded.

A financial institution settlement method according to the second modification of the twelfth embodiment of the present invention is described using FIG. 31.
(a) Steps S811 through S813 are the same as steps S801 through S803 of FIG. 30. At the time of balance confirmation in step S814, an account locking ticket is issued to the business server (financial institution) 51 from the information-processing server 30.
(b) Once the account locking ticket is issued, the business server (financial institution) 51 locks the corresponding account until the user of the portable information terminal 20 makes a withdrawal so as to prevent a withdrawal being made from the corresponding account of the business server (financial institution) 51.
(c) Once settlement from the user having an ID corresponding to a passport (account locking ticket) is carried out, the account of the business server (financial institution) 51 is unlocked.

### <Third Modification of Twelfth Embodiment: Deposit Method Settlement>

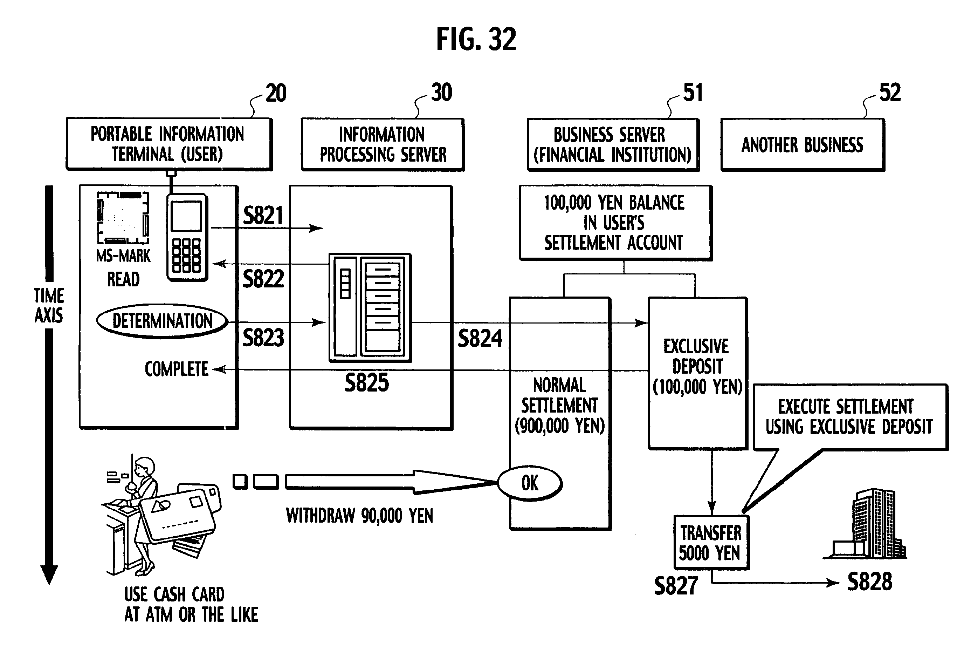

In order to prevent the withdrawal of step S805 from becoming impossible, which emanates from another business 52 making a withdraw of the balance from the corresponding account earlier during that time lag occurring between the operations of steps S804 and S805 as shown in FIG. 30, a fixed amount for settlement by the information-processing server 30 is set aside and withdrawal is made from the fixed amount, thereby preventing influences from the other business 52 on the operations of steps S827 and S828, as shown in FIG. 32.
(a) Steps S821 through S823 are the same as steps S801 through S803 of FIG. 30. However, with a deposit method according to a third modification of the fifteenth embodiment, a fixed amount is withdrawn in advance from the corresponding account of the business server (financial institution) 51 and then deposited. The deposit is uniquely corresponding to a service by the information-processing server 30 and set so that a plurality of settlement procedures or interruptions cannot occur at the same time.
(b) Therefore, when settlement is requested to the business server (financial institution) 51 in step S824, the information-processing server 30 confirms the balance of an exclusive deposit of the corresponding account for the user of the portable information terminal 20, and in step S825, approves settlement to the portable information terminal 20.
(c) If settlement is approved, the user of the portable information terminal 20 withdraws the desired amount of money from the exclusive deposit of the corresponding account.

### (THIRTEENTH EMBODIMENT)

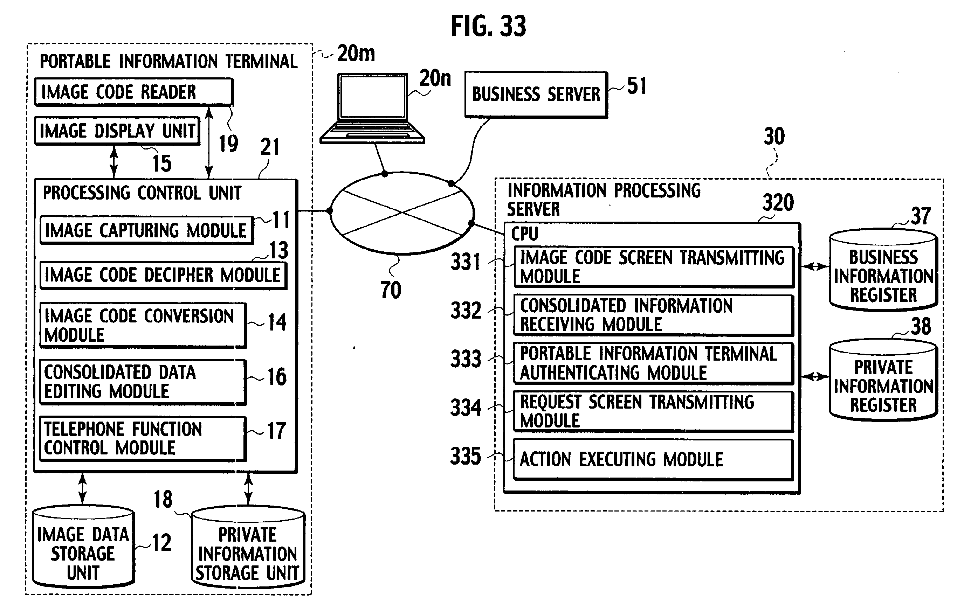

FIG. 33 is a block diagram of an information processing system according to a thirteenth embodiment of the present invention focusing on a general communication terminal (main first terminal) 20n, a portable information terminal with camera (auxiliary first terminal) 20m, a business server (second terminal) 51, and an information-processing server 30 connected to the Internet (communication network) 70.

In this case, the portable information terminal with camera (auxiliary first terminal) 20m is a portable information terminal including an image code reader 19, as described with the information processing system according to the twelfth embodiment. The image code reader 19 includes a camera, various types of scanners such as an infrared scanner, or the like. "Image codes" may include, as with the first through the twelfth embodiment, one-dimensional codes, two-dimensional codes, watermarks (acuagraphy), steganography (embedding information in an image), various other automatic identification codes or the like. As shown in FIG. 33, the portable information terminal with camera (auxiliary first terminal) 20m includes a processing control unit 21, an image display unit 15, an image data storage unit 12, and a private information storage unit 18 and the like in addition to the above-mentioned image code reader 19. The processing control unit 21 has an image capturing means (module) 11, an image code decipher means (module) 13, an image code conversion means (module) 14, a consolidated data editing means (module) 16, and a telephone function control means (module) 17. On the other hand, the general communication terminal (main first terminal) 20n is a communication terminal such as a personal computer that does not include the image code reader 19.

In actuality, a plurality of business servers (second terminals) 51, a plurality of portable information terminals with camera (auxiliary first terminals) 20m and a plurality of general communication terminals (main first terminals) 20n may be connected to the Internet (communication network) 70; however, for ease of explanation, a single business server (second terminal) 51 and a portable information terminal with camera (auxiliary first terminal) 20m, and a single general communication terminal (main first terminal) 20n are shown in the drawing. In actuality, the portable information terminal with camera (auxiliary first terminal) 20m may be connected to a digital communication network (another communication network), and this digital communication network may be connected to the Internet (communication network) 70 via a gateway apparatus.

The information-processing server 30 shown in FIG. 33 includes a CPU 320 having an image code screen transmitting means (module) 331, a consolidated information receiving means (module) 332, a portable information terminal authenticating means (module) 333, a request screen transmitting means (module) 334, and an action executing means (module) 335. In addition, a business information register 37 and a private information register 38 are connected to this CPU 320.

In this case, the image code screen transmitting means (module) 331 is a logic circuit configured to transmit a screen including an image code. Content of the "image code" includes a uniquely identifiable random number (like a onetime password) and a time stamp. The consolidated information receiving means (module) 332 is a logic circuit configured to receive consolidated information of the content of the image code and private information from the portable information terminal with camera (auxiliary first terminal) 20m. The portable information terminal authenticating means (module) 333 is a logic circuit configured to authenticate the portable information terminal with camera (auxiliary first terminal) 20m. The request screen transmitting means (module) 334 is a logic circuit configured to transmit a requested screen to the portable information terminal with camera (auxiliary first terminal) 20m. The action executing means (module) 335 is a logic circuit configured to execute an action for the portable information terminal with camera (auxiliary first terminal) 20m.

Furthermore, as with the information processing system according to the twelfth embodiment, the business information register 37 is a storage unit configured to store business information, and the private information register 38 is a storage unit configured to store private information to be authenticated.

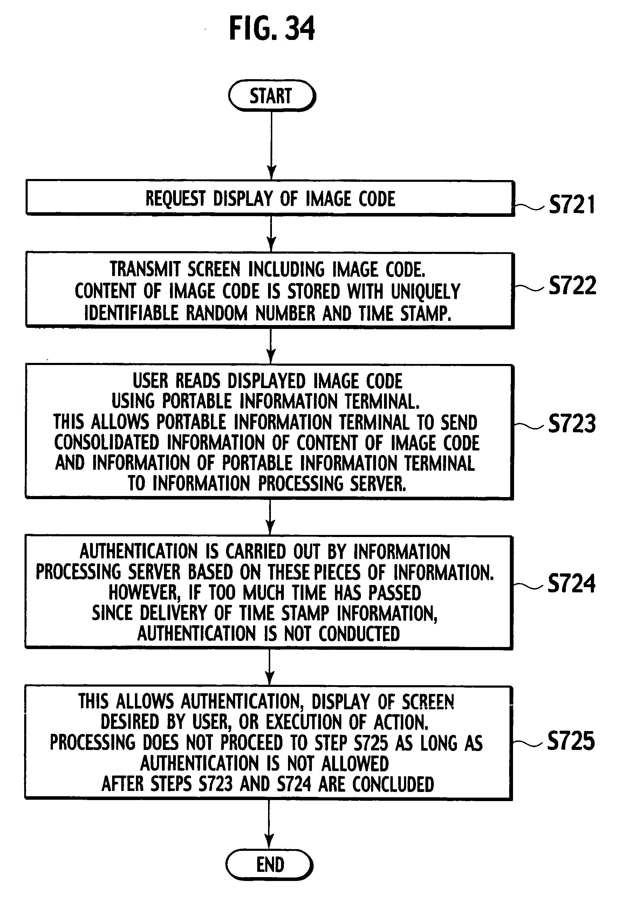

Next, an information processing method according to the thirteenth embodiment of the present invention is described using a flowchart of FIG. 34.
(a) First, in step S721, a user looking at a screen of the general communication terminal (main first terminal) 20n clicks an "image code display" button prepared as an interface on the screen to request display of an image code to the information-processing server 30.
(b) Then, in step S722, the information-processing server 30 transmits a screen including the image code to the general communication terminal (main first terminal) 20n. In step S723, the user then reads the image code displayed on the screen of the general communication terminal (main first terminal) 20n using the portable information terminal with camera (auxiliary first terminal) 20m. The consolidated data editing means (module) 16 of the portable information terminal with camera (auxiliary first terminal) 20m edits information resulting from consolidating the contents (a random number and a time stamp) of the image code displayed on the screen of the general communication terminal (main first terminal) 20n and information (private authentication ID (fixed random number)) in the portable information terminal with camera (auxiliary first terminal) 20m, generating consolidated information. The portable information terminal with camera (auxiliary first terminal) 20m transmits the consolidated information edited by the consolidated data editing means (module) 16 to the information-processing server 30.
(c) In step S724, the information-processing server 30 compares the received consolidated data and the information stored in the private information register 38 and then conducts authentication of the user. In other words, if too much time has passed since transmission of time stamp information in step S722, authentication is not given in step S724.
(d) If the user is authenticated in step S724, the information-processing server 30, in step S725, transmits the screen desired by the user to the general communication terminal (main first terminal) 20n and then displays it on the screen of the general communication terminal (main first terminal) 20n. Alternatively, in step S725, the information-processing server 30 executes the action desired by the user. Processing does not proceed to step S725 as long as authentication is not allowed after steps S723 and S724 are concluded.

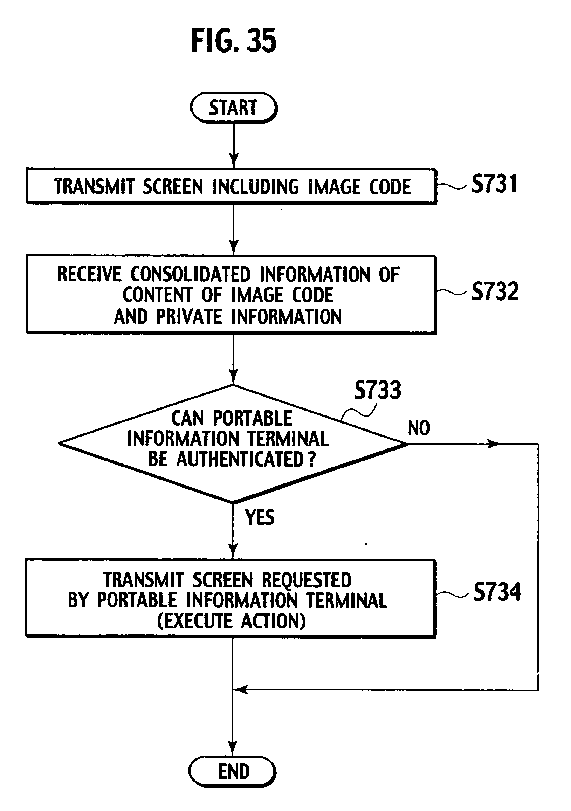

FIG. 35 shows a flowchart describing operations of the information-processing server 30 used to implement the information processing method according to the thirteenth embodiment.
(a) When there is a request for display of an image code to the information-processing server 30 from the general communication terminal (main first terminal) 20n, the image code screen transmitting means (module) 331 of the information-processing server 30 transmits a screen including that image code to the general communication terminal (main first terminal) 20n in step S731.
(b) In step S732, the consolidated information receiving means (module) 332 of the information-processing server 30 receives the consolidated information of the content of the image code and the private information from the portable information terminal with camera (auxiliary first terminal) 20m.
(c) In step S733, the portable information terminal authenticating means (module) 333 of the information-processing server 30 compares the received consolidated data and the information stored in the private information register 38 and then conducts authentication of the portable information terminal with camera (auxiliary first terminal) 20m.
(d) If the user is authenticated in step S733, the request screen transmitting means (module) 334 of the information-processing server 30 transmits the requested screen to the portable information terminal with camera (auxiliary first terminal) 20m in step S734. Furthermore, in step S734, the action executing means (module) 335 of the information-processing server 30 executes the action requested by the portable information terminal with camera (auxiliary first terminal) 20m. If authentication of the user is not allowed in step S733, processing is concluded.

A block diagram of the information processing system in which the business server 51, the information-processing server 30, the portable information terminal with camera 20m, and the general communication terminal 20n are connected to the Internet (communication network) 70 is shown in FIG. 33. In this case, if the general communication terminal 20n is a service dedicated terminal (hereafter referred to as "service dedicated terminal 20n") provided by a business, the present invention may also be applied to a service via this service dedicated terminal 20n. A terminal installed at a convenience store is a good example of the service dedicated terminal 20n. In the case where the service for the service dedicated terminal 20n requires a user's address, name, or the like, information of that user may be securely acquired by conducting authentication of the user with the same procedures as those of flowcharts of FIGS. 34 and 35. Furthermore, trouble of the user entering private information in the service dedicated terminal 20n is omitted, and only reading an image code displayed on the service dedicated terminal 20n is required.

In addition, a combination of the information processing method according to the thirteenth embodiment and the private information protection method described with the first through the sixth embodiment is possible.

Moreover, with the information processing method according to the thirteenth embodiment, an item in a form such as a menu or a chart may be displayed on a display of the service dedicated terminal 20n such as a personal computer, or search results may be displayed, affixing an image code-generated link thereupon. By doing so, the search results may be converted to image codes in a dynamically, optically readable form and then displayed. These image codes displayed on the display of the service dedicated terminal 20n cannot be falsified. With such configuration, the issuing business can be authenticated, the image codes can be read by the portable information terminal 20, and private authentication by the portable information terminal 20 is possible (member authentication and authentication regarding settlement are possible.) Furthermore, there is a merit where private information cannot be extracted with strings (computer-aided name identification is not possible) from the private authentication/ identification information stored in the private information storage unit of the portable information terminal 20 and from the server associated thereto.

As such, according to the information processing method of the thirteenth embodiment, all transactions, final decisions, and settlement procedures can be dynamically made by synchronizing with a search function, a select function, and an edit and consolidate function. For example, when a table, chairs and a lamp are selected as interior goods, if a set thereof is consolidated to generate a code, ordering is completed at once.

In other words, according to the information processing method of the thirteenth embodiment, a blanket order may be issued for various items already selected through mail order. Further according to the information processing method of the thirteenth embodiment, a security level may be arbitrarily controlled by embedding a onetime password or the like with a length according to the necessary security level at the time of code generation.

### (FOURTEENTH EMBODIMENT)

An information processing method according to a fourteenth embodiment is an authentication proxy method of data exchange between a first portable information terminal 20p and a second portable information terminal 20q. This is a method of avoiding difference in description method among dissimilar models by causing data to go through an intermediate meta server (information-processing server) 30 when processing data between the first portable information terminal 20p and the second portable information terminal 20q of dissimilar models, allowing secure data processing.

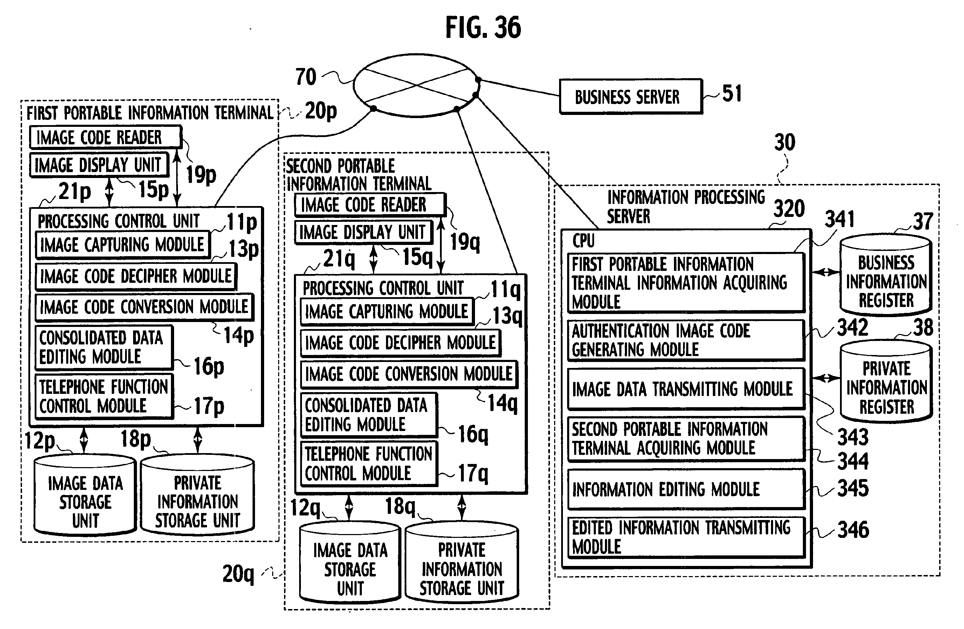

FIG. 36 is a block diagram of an information processing system according to the fourteenth embodiment of the present invention focusing on a business server 51, the information-processing server 30, the first portable information terminal 20p, and the second portable information terminal 20q connected to the Internet (communication network) 70. In this case, the first portable information terminal 20p and the second portable information terminal 20q are portable information terminals including respective image code readers 19p and 19q, as described with the information processing system according to the twelfth embodiment. The image code readers 19p and 19q may respectively include a camera, various types of scanners such as an infrared scanner, or the like, as already described. "Image codes" may include, as described with the first through the thirteenth embodiment, one-dimensional codes, two-dimensional codes, hologram codes, watermarks (acuagraphy), steganography (embedding information in an image), various other automatic identification codes, or the like.

As shown in FIG. 36, the first portable information terminal 20p includes a processing control unit 21p, an image display unit 15p, an image data storage unit 12p, and a private information storage unit 18p and the like in addition to the above-mentioned image code reader 19p. The processing control unit 21p has an image capturing means (module) 11p, an image code decipher means (module) 13p, an image code conversion means (module) 14p, a consolidated data editing means (module) 16p, and a telephone function control means (module) 17p.

On the other hand, the second portable information terminal 20q includes a processing control unit 21q, an image display unit 15q, an image data storage unit 12q, and a private information storage unit 18q and the like in addition to the above-mentioned image code reader 19q. The processing control unit 21q has an image capturing means (module) 11q, an image code decipher means (module) 13q, an image code conversion means (module) 14q, a consolidated data editing means (module) 16q, and a telephone function control means (module) 17q. In actuality, a plurality of business servers 51 and a plurality of portable information terminals 20p, 20q, ... may be connected to the Internet (communication network) 70; however, for ease of explanation, a single business server 51, the first portable terminal 20p, and the portable information terminal 20q are shown in the drawing. In actuality, the first portable information terminal 20p and the second portable information terminal 20q may be connected to a digital communication network (another communication network), and this digital communication network may be connected to the Internet (communication network) 70 via a gateway apparatus.

The information-processing server 30 shown in FIG. 36 includes a first portable information terminal information acquiring means (module) 341, an authentication image code generating means (module) 342, an image data transmitting means (module) 343, a second portable information terminal information acquiring means (module) 344, an information editing means (module) 345, and a edited information transmitting means (module) 346. In addition a business information register 37 and a private information register 38 are connected to a CPU 320.

In this case, the first portable information terminal information acquiring means (module) 341 is a logic circuit configured to acquire information from the first portable information terminal 20p. In addition, the authentication image code generating means (module) 342 is a logic circuit configured to generate an authentication image code. Furthermore, the image data transmitting means (module) 343 is a logic circuit configured to transmit the authentication image code as image data to the first portable information terminal 20p. The second portable information terminal information acquiring means (module) 344 is a logic circuit configured to receive information within the authentication image code from the second portable information terminal 20p and structural information of the second portable information terminal 20q. The information editing means (module) 345 is a logic circuit configured to edit information of the first portable information terminal 20p according to the structural information of the second portable information terminal 20q. The edited information transmitting means (module) 346 is a logic circuit configured to transmit the information from the first portable information terminal 20p to the second portable information terminal 20q. Furthermore, as with the information processing system according to the twelfth embodiment, the business information register 37 is a storage unit configured to store business information, and the private information register 38 is a storage unit configured to store private information to be authenticated.

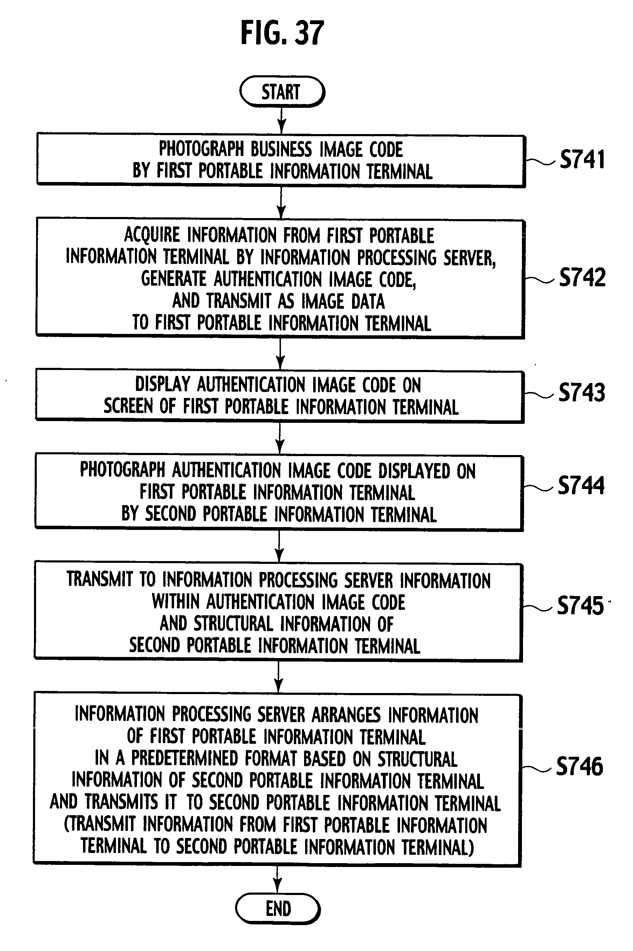

Next, an information processing method according to the fourteenth embodiment of the present invention is described using a flowchart of FIG. 37. A process flow of the case where data is transferred from the first portable information terminal 20p to the second portable information terminal 20q is assumed.
(a) First, in step S741, the image code reader 19p of the first portable information terminal 20p photographs a business image code printed on a paper medium and then stores it in the image data storage unit 12p. The image capturing means (module) 11p of the first portable information terminal 20p captures the business image code from the image data storage unit 12p, deciphers information included in the business image code using the image code decipher means (module) 13q, and edits and consolidates the deciphered information and private information stored in the private information storage unit 18p using the consolidated data editing means (module) 16p, thereby generating first consolidated information. The first portable information terminal 20p then transmits the first consolidated information to the information-processing server 30 or an intermediary server.
(b) In step S742, the information-processing server 30 acquires the first consolidated information from the first portable information terminal 20p, generates an authentication image code, and then transmits it as image data to the first portable information terminal 20p. In step S743, the authentication image code is then displayed on a screen of the image display unit 15p of the first portable information terminal 20p.
(c) In step S744, the image code reader 19q of the second portable information terminal 20q photographs the authentication image code displayed on the image display unit 15p of the first portable information terminal 20p and then stores it in the image data storage unit 12q. The image capturing means (module) 11q of the second portable information terminal 20q captures the authentication image code from the image data storage unit 12q, deciphers information included in this authentication image code using the image code decipher means (module) 13q, and edits and consolidates the deciphered information and structural information stored in the private information storage unit 18q using the consolidated data editing means (module) 16q, thereby generating second consolidated information.
(d) In step S745, the second consolidated information is transmitted from the second portable information terminal 20q to the information-processing server 30. In step S746, the information-processing server 30 arranges the information of the first portable information terminal 20p into a predetermined format using the structural information of the second portable information terminal 20q and then transmits it to the second portable information terminal 20q. In other words, the information from the first portable information terminal 20p is transmitted to the second portable information terminal 20q.

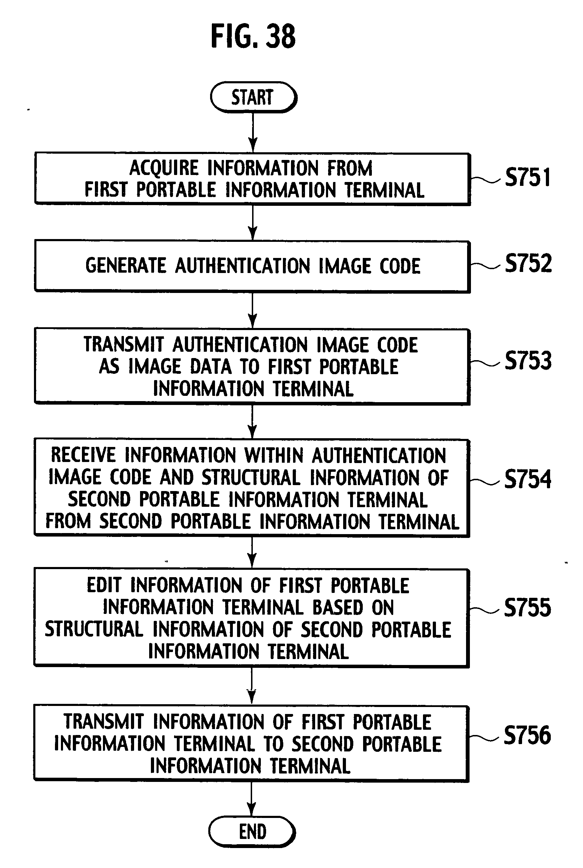

FIG. 38 shows a flowchart describing operations of the information-processing server 30 used to implement the information processing method according to the fourteenth embodiment.
(a) Once the first portable information terminal 20p transmits the first consolidated information to the information-processing server 30, the first portable information terminal information acquiring means (module) 341 acquires the first consolidated information from the first portable information terminal 20p in step S751.
(b) Next, in step S752, the authentication image code generating means (module) 342 of the information-processing server 30 generates an authentication image code.
(c) Next, in step S753, the image data transmitting means (module) 343 of the information-processing server 30 transmits the authentication image code as image data to the first portable information terminal 20p.
(d) Once the second portable information terminal 20q photographs the authentication image code displayed on the first portable information terminal 20p and the second consolidated information is transmitted from the second portable information terminal 20q to the information-processing server 30, the second portable information terminal information acquiring means (module) 344 of the information-processing server 30 receives the information within the authentication image code included in the second consolidated information from the second portable information terminal 20q and the structural information of the second portable information terminal 20q in step S754.
(e) Afterwards, in step S755, the information editing means (module) 345 of the information-processing server 30 edits the information of the first portable information terminal 20p in accordance to the structural information of the second portable information terminal 20q.
(f) In step S756, the edited information transmitting means (module) 346 of the information-processing server 30 then transmits the information of the first portable information terminal 20p to the second portable information terminal 20q.

### <First Modification of Fourteenth Embodiment: Specific Information Communication>

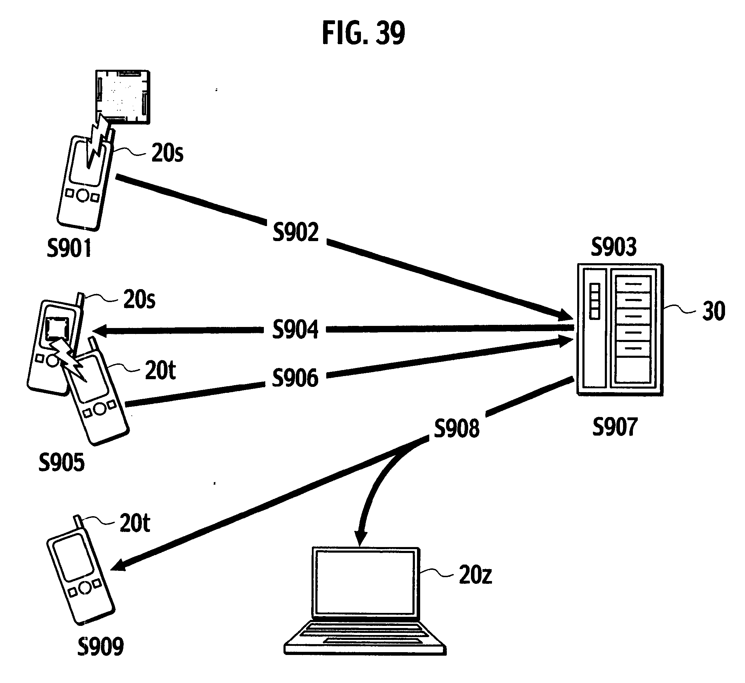

Specific information of a first portable information terminal 20s is acquired by a second portable information terminal 20t or a mobile phone using a method shown in FIG. 39.
(a) First, in step S901, an image code reader of the first portable information terminal 20s photographs a business image code printed on a paper medium and then stores it in an image data storage unit. An image capturing means (module) of the first portable information terminal 20s captures the business image code from the image data storage unit, deciphers information included in the business image code using an image code decipher means (module), and edits and consolidates the deciphered information and private information stored in a private information storage unit using a consolidated data editing means (module), thereby generating first consolidated information. The first consolidated information also includes specific information to be registered in the second portable information terminal 20t from the first portable information terminal 20s. In step S902, the first portable information terminal 20s then transmits the first consolidated information to the information-processing server 30 or an intermediary server.
(b) In step S903, the information-processing server 30 acquires the first consolidated information from the first portable information terminal 20s and then generates the specific information (e.g., phone book registration information) into an image code. In step S904, the image code of the specific information is transmitted as image data to the first portable information terminal 20s. In step S905, the image data of the specific information is then displayed on a screen of an image display unit of the first portable information terminal 20s.
(c) In step S905, the image code reader of the second portable information terminal 20t photographs the image data (phone book registration information) of the specific information displayed on the image display unit of the first portable information terminal 20s and then stores it in the image data storage unit. An image capturing means (module) of the second portable information terminal 20t captures the image data (phone book registration information) of the specific information from the image data storage unit, deciphers information included in the image data (phone book registration information) of the specific information using an image code decipher means (module), and edits and consolidates the deciphered specific information and structural information stored in a private information storage unit using a consolidated data editing means (module), thereby generating second consolidated information.
(d) In step S906, the second consolidated information is transmitted from the second portable information terminal 20t to the information-processing server 30. In step S907, the information-processing server 30 arranges the specific information (phone book registration information) of the first portable information terminal 20s in a predetermined format using the structural information of the second portable information terminal 20t and then in step S908, transmits it to the second portable information terminal 20t. In other words, the specific information (phone book registration information) is transmitted from the first portable information terminal 20s to the second portable information terminal 20t. According to circumstances, the specific information (phone book registration information) from the first portable information terminal 20s may be transmitted simultaneously to another machine such as a personal computer 20z.

Note that if necessary, an image code of the specific information of the second portable information terminal 20t is issued and is read by the first portable information terminal 20s or mobile phone to exchange the information (an image code for the opposing mobile phone should be generated, displayed, and then read using the same procedure since the opposing mobile phone model is known.)

### <Second Modification of Fourteenth Embodiment: User Compatibility Fortune Telling>

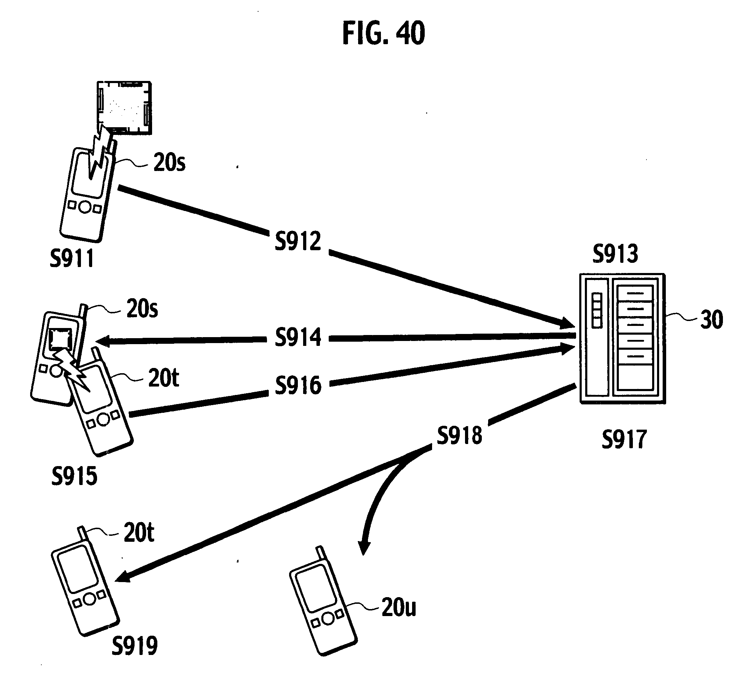

Actions emanating from two-dimensional code information (action information), information (private information) of the first portable information terminal 20s, and information (private information) of the second portable information terminal 20t may be implemented. In other words, actions emanating from two or more pieces of private information may be implemented. For example, fortune telling of compatibility between the user of the first portable information terminal 20s and the user of the second portable information terminal 20t is possible. FIG. 40 assumes fortune telling of compatibility between the user of the first portable information terminal 20s and the user of the second portable information terminal 20t.
(a) First, in step S911, the image code reader of the first portable information terminal 20s photographs a fortune telling code printed on a paper medium and then stores it in the image data storage unit. The image capturing means (module) of the first portable information terminal 20s captures the fortune telling code from the image data storage unit, deciphers information included in the fortune telling code using the image code decipher means (module), and edits and consolidates the deciphered information and private information stored in the private information storage unit using the consolidated data editing means (module), thereby generating first consolidated information. The first consolidated information includes action information to be registered in the second portable information terminal 20t from the first portable information terminal 20s. In step S912, the first portable information terminal 20s then transmits the first consolidated information to the information-processing server 30 or an intermediary server.
(b) In step S913, the information-processing server 30 acquires the first consolidated information from the first portable information terminal 20s and then generates the action information into image codes. In step S914, the image code of the action information (fortune telling information to be read by the second portable information terminal 20t) is transmitted as image data to the first portable information terminal 20s. In step S915, the image data of the action information is then displayed on the screen of the image display unit of the first portable information terminal 20s.
(c) In step S915, the image code reader of the second portable information terminal 20t photographs the image data of the action information displayed on the image display unit of the first portable information terminal 20s and then stores it in the image data storage unit. The image capturing means (module) of the second portable information terminal 20t captures the image data of the action information from the image data storage unit, deciphers information included in the image data of the action information using the image code decipher means (module), and edits and consolidates the deciphered action information and structural information stored in the private information storage unit using the consolidated data editing means (module), thereby generating second consolidated information.
(d) In step S916, the second consolidated information is transmitted from the second portable information terminal 20t to the information-processing server 30. In step S917, the information-processing server 30 arranges the action information of the first portable information terminal 20s in a predetermined format using the structural information of the second portable information terminal 20t and then conducts fortune telling of compatibility between the user of the first portable information terminal 20s and the user of the second portable information terminal 20t. In step 918, results of the fortune telling of compatibility between the user of the first portable information terminal 20s and the user of the second portable information terminal 20t are transmitted to the second portable information terminal 20t. According to circumstances, the results of the fortune telling of compatibility between the user of the first portable information terminal 20s and the user of the second portable information terminal 20t from the first portable information terminal 20s may be transmitted simultaneously to another machine such as the personal computer 20z.

### <Third Modification of Fourteenth Embodiment: Permission Function and Information Sharing>

Multiple, namely four terminals: the first portable information terminal 20s, the second portable information terminal 20t, a third portable information terminal 20u, and a fourth portable information terminal 20v are assumed forthwith. It is a system that sets a permission function to allow only specified terminals to share information, namely allow only the first portable information terminal 20s, the second portable information terminal 20t, and a fourth portable information terminal 20v of the four terminals to share information but prevent the third portable information terminal 20u from sharing the information.
(a) First, the information-processing server 30 sets so that only the second portable information terminal 20t and the fourth portable information terminal 20v are allowed to respond to an action from the first portable information terminal 20s when there is the action.
(b) In step S921, the image code reader of the second portable information terminal 20t photographs image data of specific information displayed on the image display unit of the first portable information terminal 20s. The image code decipher means (module) deciphers information included in the image data of this specific data. The consolidated data editing means (module) then edits and consolidates the deciphered specific information and structural information stored in the private information storage unit of the second portable information terminal 20t, thereby generating consolidated information of the second portable information terminal 20t. The consolidated information of the second portable information terminal 20t is then transmitted to the information-processing server 30 from the second portable information terminal 20t.
(c) The information-processing server 30 confirms that the action is authorized for the second portable information terminal 20t, and prepares specific information of the first portable information terminal 20s using the structural information of the second portable information terminal 20t. In step S922, the specific information obtained from the first portable information terminal 20p is then transmitted to the second portable information terminal 20t in a form in conformity with the structure thereof.
(d) In step S923, an image code reader of the third portable information terminal 20u photographs the image data of the specific information displayed on the image display unit of the first portable information terminal 20s, an image code decipher means (module) deciphers the information included in the image data of this specific data, and a consolidated data editing means (module) then edits and consolidates the deciphered specific information and structural information stored in a private information storage unit of the third portable information terminal 20u, thereby generating consolidated information of the third portable information terminal 20u. The consolidated information of the third portable information terminal 20u is then transmitted to the information-processing server 30 from the third portable information terminal 20u.
(e) However, since the information-processing server 30 cannot authorize the action for the third portable information terminal 20u, it cannot prepare the specific information of the first portable information terminal 20s using the structural information of the third portable information terminal 20u. Therefore, in step S924, the specific information obtained from the first portable information terminal 20p cannot be transmitted to the third portable information terminal 20u, and thus an error message is transmitted.
(f) Furthermore, an image code reader of the fourth portable information terminal 20v photographs the image data of the specific information displayed on the image display unit of the first portable information terminal 20s to generate consolidated information of deciphered specific information and structural information stored in a private information storage unit of the fourth portable information terminal 20v, and if the resulting information is transmitted to the information-processing server 30, the information-processing server 30 may confirm authorization of the action to the fourth portable information terminal 20v and then prepare the specific information of the first portable information terminal 20s using the structural information of the fourth portable information terminal 20v. Afterwards, the specific information obtained from the first portable information terminal 20p is transmitted to the fourth portable information terminal 20v in a form in conformity with the structure thereof.

In this manner, only the specific information of the first portable information terminal 20s is transmitted to the second portable information terminal 20t and the fourth portable information terminal 20v but cannot be transmitted to the third portable information terminal 20u. This is a system that sets a permission function, allowing only specified terminals to share information but preventing other terminals from sharing the same.

The permission function of the information processing system according to the third modification of the fourteenth embodiment may be set in conformity with a time stamp. Note that the information processing system according to the third modification of the fourteenth embodiment is effective for portable information terminals when communicating self-produced ring tones, for example.

### <Fourth Modification of Fourteenth Embodiment: Content Synchronization Method>

Downloading different contents such as sound or music clips and simultaneously regenerating them with two or more portable information terminals (mobile phones) allows implementation of BGM and recitation, musical accompaniment and theme, a JAM session, or the like. In this case, the JAM session or the like requires synchronization of the portable information terminals (mobile phones).

With an information processing system according to the fourth modification of the fourteenth embodiment, the respective portable information terminals (mobile phones) keep absolute time and are respectively standardized. Time may be synchronized using, for example, radio-controlled clocks, or a certain server may have time information, where the respective terminals have clocks synchronized thereto. Alternatively, clock (time) information may be read by the server when an image code is read. When the respective portable information terminals read in simultaneous performance markers, a starting time is set, and at the beginning of approximate simultaneous (may deviate 1 to 2 seconds) performance, they start playing simultaneously in synch to that clock. For example, synchronizing at every bar is possible, such as starting at a certain time in thirty second units closest to the present time. Furthermore, synchronizing to a MIDI is also possible.

### (OTHER EMBODIMENTS)

While the present invention is described in accordance with the aforementioned first through the fourteenth embodiment, it should not be understood that the description and drawings that configure part of this disclosure are to limit the present invention. This disclosure makes clear a variety of alternative embodiments and operational techniques for those skilled in the art.

While the flow of generating the transmission source metadata MD0 by the first wearable computer (portable information terminal) 10a has been exemplified with the first through the third embodiment, the same security may be assured using the private information protection method with a reverse flow such that the metadata is generated on the business server 51 side, for example, and then transmitted to the user side.

Furthermore, when belonging to a plurality of communities, the sender may select various methods such as specifying to which community a transmitter is transmitting via an input unit of the first wearable computer 10a, replacing an SIM card, an IC chip, an RFID, or the like, and/ or embedding in cords to be scanned by the first wearable computer 10a, allowing identification.

While the flow of generating the transmission source metadata MD0 by the first wearable computer (portable information terminal) 10a has been exemplified with the fourth through the sixth embodiment, the same security may be assured using the private information protection method with a reverse flow such that the metadata is generated on the side of the business server 51, for example, and then transmitted to the user side.

Furthermore, when belonging to a plurality of communities, the sender may select various methods such as specifying to which community a transmitter is transmitting via an input unit of the first wearable computer 10a, replacing an SIM card, an IC chip, an RFID, or the like, and/ or embedding in cords to be scanned by the first wearable computer 10a, allowing identification.

The encryption key acquisition method using the retrieval tag information CODE generated by the first wearable computer (portable information terminal) 10a described with the seventh through the eleventh embodiment may be used for the information protection method for the electronic business transactions described in the second embodiment and information communication within a community described with the third embodiment.

While the retrieval tag information CODE2 described with the seventh through the eleventh embodiment is described as being encrypted and then transmitted, the retrieval tag information CODE2 may be transmitted as is without being encrypted when employing a cipher communication method using an encryption protocol SSL or the like.

For example, transmission destination information may be added to an image, and the resulting image may be transmitted to the information-processing servers 30a and 30b so as to transmit information to a communication terminal and also transmit the information to another structure such as a personal computer simultaneously.

As such, the present invention may naturally include various embodiments not described herein. Therefore, the technical scope of the present invention should be defined only by items for specifying the invention according to the appended claims that are regarded appropriate according to the above description. Note that the entire contents disclosed in Japanese Patent Application No. 2002-160369 filed on May 31, 2002, the entire contents disclosed in Japanese Patent Application No. 2002-222183 filed on June 30, 2002, the entire contents disclosed in Japanese Patent Application No. 2003-307872 filed on August 29, 2003, and the entire contents disclosed in Japanese Patent Application No. 2003-338624 filed on September 29, 2003 are incorporated herein by reference.

### INDUSTRIAL APPLICABILITY

The present invention conceals data such as private information from third parties during communication in a ubiquitous environment and is applicable to fields for various electronic business transactions. Furthermore, it may also be applied to the field of access management at an event venue or the like.

## Claims

1. An information-processing server used in an information processing system to authenticate a communication terminal not including authentication information, based on authentication information stored in an authentication terminal, the information-processing server comprising:
an authentication information storage unit configured to store the authentication information;
an authentication image generating module configured to generate an authentication parameter, generate an authentication image including the authentication parameter and transmit it to the communication terminal, and then store the authentication parameter in an authentication parameter storage unit upon reception of an authentication request for the communication terminal;
an authentication information acquiring module configured to acquire from the authentication terminal information of the authentication image acquired from the communication terminal and the authentication information stored in the authentication terminal; and
an authentication information verifying module configured to access the authentication parameter storage unit, determine that the information of the authentication image acquired by the authentication information acquiring module is information of an image generated by the authentication image generating module, and determine whether or not the authentication information stored in the authentication terminal matches the authentication information stored in the authentication information storage unit, and then transmit those results to the communication terminal.

2. The information-processing server of claim 1, wherein the authentication parameter generated by the authentication image generating module includes at least one of a uniquely identifiable random number and a date.

3. The information-processing server of claim 1, wherein
the authentication image generating module further stores an effective date of the authentication parameter in the authentication parameter storage unit; and
the authentication information verifying module authorizes authentication when a date acquired by the authentication information acquiring module is before the effective date of the authentication parameter stored in the authentication parameter storage unit, and denies authentication when the date acquired by the authentication information acquiring module is after the effective date of the authentication parameter.

4. The information-processing server of claim 1, wherein
the authentication image generating module transmits the authentication image to the communication terminal via a first communication network; and
the authentication information acquiring module acquires from the authentication terminal via a second communication network different from the first communication network, the information of the authentication image and the authentication information.

5. The information-processing server of claim 1, wherein the information of the authentication image is information obtained at the authentication terminal, by decoding the authentication image acquired from the communication terminal.

6. The information-processing server of claim 1, wherein the information of the authentication image is information resulting from decoding the authentication image acquired from the communication terminal and received from the authentication terminal.

7. The information-processing server of claim 1, wherein the authentication terminal takes and decodes an authentication image presented at the communication terminal to acquire the information of the authentication image from the communication terminal,.

8. The information-processing server of claim 1, wherein
the information processing system further comprises a content providing server configured to provide content to the communication terminal;
the authentication image generating module receives from the content providing server an authentication request for the communication terminal, and
the authentication information verifying module transmits the results to the content providing server.

9. An information processing method used by an information processing system to authenticate a communication terminal not including authentication information, based on authentication information stored in an authentication terminal, the information processing method comprising:
storing the authentication information in an authentication information storage unit;
generating an authentication parameter, generating an authentication image including the authentication parameter and transmitting the authentication image to the communication terminal, and storing the authentication parameter in an authentication parameter storage unit by an authentication image generating module upon reception of an authentication request for the communication terminal;
acquiring, through the authentication terminal, information of the authentication image transmitted from the communication terminal and the authentication information provided by the authentication terminal, using an authentication information acquiring module; and
verifying the authentication information by accessing the authentication parameter storage unit, determining that the information of the authentication image is information of an image provided through generating the authentication image, and determining whether or not the authentication information stored in the authentication terminal matches the authentication information stored in the authentication information storage unit, and transmitting those results to the communication terminal.

10. The information processing method of claim 9, wherein the authentication parameter, provided through generating the authentication image, includes at least one of a uniquely identifiable random number and a date.

11. The information processing method of claim 9, wherein
in generating an authentication image, the authentication parameter storage unit further stores an effective date of the authentication parameter; and
in verifying the authentication information, authentication is authorized when a date, obtained through acquiring the authentication information, is before the effective date of the authentication parameter stored in the authentication parameter storage unit, and authentication is denied when the date, obtained through acquiring the authentication information, is after the effective date of the authentication parameters.

12. The information processing method of claim 9, wherein
in generating the authentication image, the authentication image is transmitted to the communication terminal via a first communication network; and
in acquiring the authentication information, the information of the authentication image and the authentication information are acquired from the authentication terminal via a second communication network different from the first communication network.

13. The information processing method of claim 9, wherein the information of the authentication image is information obtained at the authentication terminal, by decoding the authentication image acquired from the communication terminal.

14. The information processing method of claim 9, wherein the information of the authentication image is information resulting from decoding the authentication image acquired from the communication terminal and received from the authentication terminal.

15. The information processing method of claim 9, wherein the authentication terminal takes and decodes an authentication image presented to the communication terminal to acquire the information of the authentication image from the communication terminal,.

16. The information processing method of claim 9, wherein
the information processing system further comprises a content providing server configured to provide a content to the communication terminal;
in generating the authentication image, an authentication request for the communication terminal is received from the content providing server, and
in verifying the authentication information, the results are transmitted to the content providing server.

17. An information-processing server comprising:
an identifier correspondence information storage unit configured to store correspondence information retrieved by a communication terminal identifier; and
an information converting module configured to convert information entered from a communication terminal in conformity with the correspondence information.

18. The information-processing server of claim 17, further comprising:
an authentication image generating module configured to generate an image from the information entered from the communication terminal.

19. The information-processing server of claim 17, further comprising:
an authorization information storage unit configured to store authorization information indicating whether the communication terminal is authorized to communicate information; and
an authorization judging module configured to judge the authentication information.

20. An information processing method used in a system including a first terminal, a second terminal, and an information-processing server mediating between the first terminal and the second terminal, the information processing method comprising:
receiving an action request as well as first level private information from the first terminal;
authenticating the first terminal based on the first level private information;
issuing authentication information to the first terminal;
receiving from the first terminal second level private information of a higher security level than the first level private information as well as the authentication information; and
transmitting the second level private information for an action requested, to the second terminal based on the authentication information,
wherein receiving, authenticating, issuing, receiving and transmitting are carried out by the information-processing server.

21. The information processing method of claim 20, wherein
the information-processing server is organized at the first terminal by a plurality of servers, the information-processing server encrypts a plurality of pieces of information, the number of pieces of information corresponding to the number of the servers, using a plurality of encryption keys corresponding to the servers one to one, and generates as the second level private information a plurality of pieces of encrypted information, the number of pieces of encrypted information corresponding to the number of the servers; and
each of the servers of the information-processing server successively decrypts the plurality of pieces of encrypted information, and the information-processing server transmits the second level private information to the second terminal.

22. The information processing method of claim 20, wherein the first level private information is generated using a group of fixed random numbers stored in memory of the first terminal.

23. The information processing method of claim 20, wherein the first terminal comprises a combination of a main first terminal and an auxiliary first terminal, an image information transmitted as the authentication information to the main first terminal is optically acquired by the auxiliary first terminal so as to provide private information of the auxiliary first terminal, and the private information of the auxiliary first terminal is received as the second level private information with the authentication information from the auxiliary first terminal.
